# EUROPEAN PATENT SPECIFICATION

(11) **EP 3 971 458 B1**
(45) Date of publication and mention of the grant of the patent: **05.02.2025**
(21) Application number: 21185335.3
(22) Date of filing: 13.07.2021
(51) Int. Cl.: F16L 9/18, F16L 39/00, B33Y 80/00, B22F 10/20, F16L 23/00, F16L 23/028, F16L 23/032, B64C 13/40, B64D 37/00

(54) **DUAL-WALLED FLUID TRANSPORTATION SYSTEMS AND RELATED METHODS**
DOPPELWANDIGE FLÜSSIGKEITSTRANSPORTSYSTEME UND ZUGEHÖRIGE VERFAHREN
SYSTÈMES DE TRANSPORT DE FLUIDES À DOUBLE PAROI ET PROCÉDÉS ASSOCIÉS

(30) Priority: 22.09.2020 US 202063081739 P
(43) Date of publication of application: 23.03.2022
(73) Proprietor: The Boeing Company, Arlington, VA 22202 (US)
(72) Inventor: Eckols, David Ansyl, Chicago, 60606-1596 (US); Haworth, Troy, Chicago, 60606-1596 (US); Wildermuth, Peter D., Chicago, 60606-1596 (US)
(74) Representative: Witte, Weller & Partner Patentanwälte mbB

(56) References cited:
- US-A- 3 834 341
- US-A1- 2011 154 886
- US-A1- 2015 316 186
- US-A1- 2019 195 399

## Description

### FIELD

The present disclosure relates to dual-walled fluid transportation systems and related methods.

### BACKGROUND

Double-walled conduits, such as double-walled pipes, double-walled tubes, and double-walled ducts, are utilized in a wide variety of industries for fluid transportation. Generally speaking, double-walled conduits include an inner conduit positioned within an outer conduit such that an interstitial volume is formed between the inner conduit and the outer conduit. Often, the inner conduit is used to transport fluid. In some applications, the outer conduit is used as a secondary or containment vessel that is utilized to capture or contain fluid leaks from the inner conduit. Additionally or alternatively, the outer conduit and the interstitial volume are utilized to insulate fluid within the inner conduit, such as to maintain a temperature gradient between the fluid within the inner conduit and the outside of the outer conduit.

Traditionally, double-walled conduits require a connecting structure that extends within the interstitial space and mechanically interconnects the inner conduit with the outer conduit to position the inner conduit within the outer conduit. An example of a connecting structure is a radial sprocket that is welded or otherwise mechanically joined with the inner conduit and the outer conduit. Thus, in traditional double-walled conduits, the inner conduit and the outer conduit typically are interconnected and are not mechanically isolated from one another. Mechanical coupling of the inner conduit and the outer conduit can cause a variety of issues, particularly for applications in which stress is applied to the double-walled conduit and/or large temperature gradients are present between the inner conduit and the outer conduit. More specifically, defects, cracks, or strain may be transmitted through the connecting structure, which can result in mechanical failure of both the inner conduit and the outer conduit. Additionally, the connecting structure can transmit heat between the inner conduit and the outer conduit, which also may result in mechanical failure. Thus, a need exists for improved dual-walled fluid transportation systems, dual-walled fluid conduits, and methods for forming the same that may mechanically or thermally insulate the inner conduit from the outer conduit such as to prevent defects, cracks, strain, and/or heat from being transmitted therebetween.

Document US 3 834 341 A, according to its abstract, states that in a water-cooled engine exhaust system for boats having inboard engines wherein exhaust gases from the engine are vented through a shaped conduit, couplings are provided to enable the conduit to be fabricated from a series of straight and curved sections. The sections are composed of coaxial pipes of different diameters which cooperate to provide a central flow passage for exhaust gases and an annular flow passage for the cooling fluid. Each coupling comprises complementary elements which are mounted on the ends of the sections and which are fastened together by means of band clamps. Each element is internally constructed to provide fluid communication between the central and annular passages in adjacent conduit-sections. Special transition coupling members are also provided for the ends of the conduit to supply cooling water to and to remove cooling water from the annular passage.

Document US 2015/316186 A1 discloses an assembly for coupling a pair of double-walled tubes, each double-walled tube having an outer tube, and an inner tube disposed axially within the outer tube.

The assembly includes a pair of flanges disposed in an opposing relation to each other and mutually coupled thereto. Each flange defines a central opening that is configured to correspond with a similar opening on an opposing flange. The central openings of the coupled flanges are configured to communicate a first fluid. The assembly further includes an annular hub portion extending axially away from each of the flanges. The annular hub portion is disposed about the central opening of the respective flange. The assembly further includes a lip portion depending frustoconically from the hub portion. The flange, the hub portion, and the lip portion define conduits extending therethrough. The conduits are configured to allow passage of a second fluid therethrough.

A collar configured to releasably couple with the annular hub portion, has an inner surface including a frustoconical face defined thereon, and the frustoconical face is disposed parallel to the lip portion. The outer tube of each double-walled tube is flared until an outer surface of the outer tube abuts the frustoconical face. The inner tube of each double-walled tube until an outer surface of the inner tube abuts the frustoconical lip portion of the assembly.

Document US 2011/154886 A1, according to its abstract, states a leak detection feature for a fluid conduit. The leak detection feature facilitates the monitoring of fluid leaks at the interface of two adjoining conduit flange fittings. An embodiment of a flange fitting with a leak detection feature for a fluid conduit having an opening. The flange fitting includes a flange body around the opening of the fluid conduit, a leak detection passageway formed in the flange body, and a leak detection port formed in the flange body. The flange body has a sealing face surface configured to mate with a cooperating flange fitting, and the leak detection passageway terminates at the sealing face surface. The leak detection port is in fluid communication with the leak detection passageway, and the leak detection port is configured for fluid communication with a leak sensing apparatus.

Document US 2019/195399 A1, according to its abstract, states that dual containment fitting may include a primary tubing, a secondary tubing, and a dual containment body. The secondary tubing may surround and be concentric with a first portion of the primary tubing forming a first leak containment space between the primary tubing and the secondary tubing. The dual containment body may include a flare fitting portion and a primary containment nut portion. The flare fitting portion may surround and be concentric with the primary tubing forming a second leak containment space between the primary tubing and the flare fitting portion. The primary containment nut portion may surround and be concentric with the flared end of the primary tubing forming a third leak containment space between the primary tubing and the primary containment nut portion. The primary containment nut portion may include at least one leak passage hole connecting the third leak containment space with the second leak containment space.

### SUMMARY

According to the present disclosure, a dual-walled fluid transportation system as defined in independent claim 1 and a method as defined in independent claim 9 are provided. Further embodiments of the claimed invention are defined in the dependent claims. Although the claimed invention is only defined by the claims, the below embodiments, examples, and aspects are present for aiding in understanding the background and advantages of the claimed invention.

### BRIEF DESCRIPTION OF THE DRAWINGS

Fig. 1 is represents examples of aircraft that include dual-walled fluid transportation systems according to the present disclosure.
Fig. 2 is a schematic representation of dual-walled fluid transportation systems according to the present disclosure.
Fig. 3 is an isometric view of an example dual-walled fluid conduit according to the present disclosure.
Fig. 4 is a partial cross-sectional view of the example dual-walled fluid conduit of Fig. 3 taken along line 4-4 in Fig. 3.
Fig. 5 is a cross-sectional view of the example dual-walled fluid conduits of Fig. 3 taken along line 5-5 in Fig. 3.
Fig. 6 is an isometric cutaway view of another example dual-walled fluid conduit according to the present disclosure.
Fig. 7 is an isometric view illustrating an example connecting ring according to the present disclosure.
Fig. 8 is cross-sectional view illustrating examples adjacent dual-walled fluid conduits together with a connecting ring interfacing the inner ducts and outer ducts thereof according to the present disclosure.
Fig. 9 is an isometric view of an example connecting plate according to the present disclosure.
Fig. 10 is an isometric cross-sectional view illustrating examples of adjacent dual-walled fluid conduits together with a connecting plate interconnecting the adjacent dual-walled fluid conduits according to the present disclosure.
Fig. 11 is a flowchart schematically representing examples of methods according to the present disclosure.
Fig. 12 is an isometric partial cross-sectional view of an example dual-walled fluid conduit structure interconnected with an example support structure formed according to a method of the present disclosure.
Fig. 13 is an isometric cross-sectional view of an example dual-walled fluid conduit structure formed according to a method of the present disclosure prior to separating the inner duct flared end regions from the outer duct flared end regions.

### DESCRIPTION

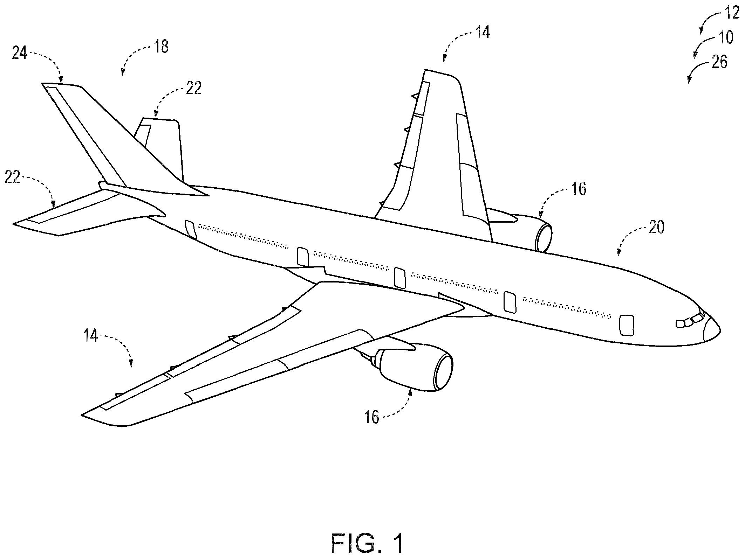

Figs. 1-13 provide examples of dual-walled fluid transportation systems 10, dual-walled fluid conduits 100, aircraft 12 that include and/or utilize dual-walled fluid transportation systems 10, and methods 500 according to the present disclosure. Elements that serve a similar, or at least substantially similar, purpose are labeled with like numbers in each of Figs. 1-13, and these elements may not be discussed in detail herein with reference to each of Figs. 1-13. Similarly, all elements may not be labeled in each of Figs. 1-13, but reference numerals associated therewith may be utilized herein for consistency. Elements, components, and/or features that are discussed herein with reference to one or more of Figs. 1-13 may be included in and/or utilized with any of Figs. 1-13 without departing from the scope of the present disclosure.

Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

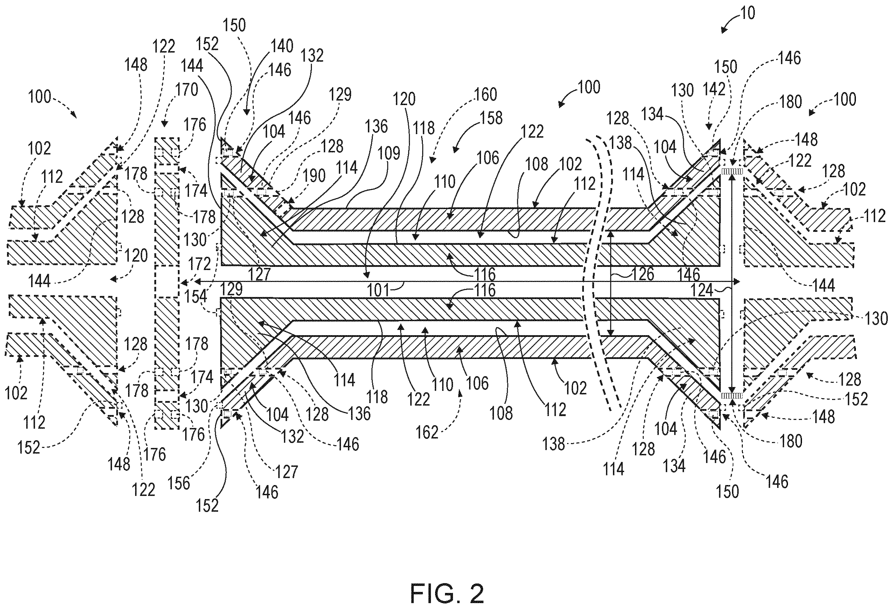

Fig. 1 illustrates examples of aircraft that include and/or utilize dual-walled fluid transportation systems 10 according to the present disclosure. Examples of dual-walled fluid transportation systems 10 are illustrated in Figs. 2-10 and discussed in more detain herein with reference thereto.

Aircraft 12 may include a fuselage 20 and at least one wing 14 operatively attached to and/or extending from fuselage 20. Aircraft 12 also may include at least one engine 16, which may be operatively attached to fuselage 20, such as via a corresponding wing 14. Aircraft 12 further may include a tail assembly 18 that may be operatively attached to and/or at least partially defined by fuselage 20. Tail assembly 18 may include at least one vertical stabilizer 24 and at least one horizontal stabilizer 22. Aircraft 12 further includes various fluid-handling systems 26, such as a fuel supply system that may supply fuel to engine(s) 16 and/or hydraulic systems and/or pneumatic systems that may be utilized to actuate various flight control surfaces 28 included in aircraft 12. In Fig. 1, at least one fluid handling system 26 is, includes, and/or utilizes dual-walled fluid transportation systems 10 according to the present disclosure.

Aircraft 12 may include any suitable type of aircraft, with examples including a private aircraft, a commercial aircraft, a passenger aircraft, a military aircraft, a jetliner, an autonomous aircraft, a wide-body aircraft, and/or a narrow body aircraft. While Fig. 1 illustrates examples in which aircraft 12 is a fixed wing aircraft, dual-walled fluid transportation systems 10 also may be included in and/or utilized with any suitable type of aircraft with illustrative non-exclusive examples of other types of aircraft including rotorcraft, helicopters, tiltwing aircraft, tiltrotor aircraft, rockets, rocket propulsion systems, and/or spacecraft. Dual-walled fluid transportation systems 10 according to the present disclosure also are not limited to aviation and may be included in and/or utilized with fluid handling systems of ground transportation vehicles, nautical vehicles, as well as within fluid handling systems of manufacturing industries and/or various other industries such as the petroleum and natural gas industries.

Fig. 2 schematically represents a cross-sectional example of dual-walled fluid transportation systems 10 according to the present disclosure. As shown, dual-walled fluid transportation systems 10 include at least one dual-walled fluid conduit 100. Dual-walled fluid conduit 100 includes an outer duct 102 and an inner duct 112 that extends within an outer duct internal volume 110 defined by outer duct 102. Outer duct 102 comprises an outer duct pair of flared end regions 104 and an outer duct central region 106 that extends between outer duct pair of flared end regions 104. Outer duct pair of flared end regions 104 and outer duct central region 106 define an outer duct internal surface 108 that surrounds outer duct internal volume 110. Similarly, inner duct 112 includes an inner duct pair of flared end regions 114 and an inner duct central region 116 that extends between inner duct pair of flared end regions 114, in which inner duct central region 116 and inner duct pair of flared end regions 114 define an inner duct external surface 118. Inner duct 112 defines a central conduit 120 that extends through inner duct pair of flared end regions 114 and within inner duct central region 116.

Inner duct 112 and outer duct 102 are dimensioned and shaped to be supported such that an inter duct channel 122 completely separates inner duct external surface 118 from outer duct internal surface 108. Stated another way, inner duct 112 and outer duct 102 may be dimensioned and shaped to be supported such that outer duct internal surface 108 and inner duct external surface 118 are non-contacting, with inter duct channel 122 extending therebetween.

Inner duct 112 and outer duct 102 define interlocking geometries. Stated differently, inner duct 112 and outer duct 102 may be dimensioned and shaped such that inner duct 112 cannot be removed from outer duct 102 without damage or destruction to inner duct 112 and/or outer duct 102. Put another way, each inner duct flared end region of inner duct pair of flared end regions 114 defines an inner duct outer-most lateral dimension 124, and along outer duct central region 106, outer duct internal surface 108 defines an outer duct channel outer-most lateral dimension 126. In some examples, inner duct outer-most lateral dimension 124 is greater than outer duct channel outer-most lateral dimension 126, such that inner duct 112 and outer duct 102 define interlocking geometries. In some examples, inner duct 112 is a monolithic body and/or outer duct 102 is a monolithic body. In other words, inner duct 112 and outer duct 102 each may define a continuous piece that is formed without welds or joints.

Dual-walled fluid transportation system 10 additionally or alternatively may be referred to herein as double-walled fluid transportation system 10, and/or dual-ducted fluid transportation system 10. Similarly, dual-walled fluid conduit 100 additionally or alternatively may be referred to as double-walled fluid conduit 100, dual-ducted fluid conduit 100, and/or double-ducted fluid conduit 100. Inner duct 112 additionally or alternatively may be referred to as central duct 112, inner conduit 112, flared inner wall 112, inner flared pipe 112, and/or flared inner tube 112. Outer duct 102 additionally or alternatively may be referred to as outer conduit 102, flared outer wall 102, outer flared pipe 102, and/or flared outer tube 102.

Dual-walled fluid transportation system 10 may be used to covey or transport at least one fluid within or through dual-walled fluid conduit 100. As an example, dual-walled fluid transportation system 10 may be used to convey or transport a fluid within central conduit 120 of inner duct 112. In some examples, dual-walled fluid transportation system 10 additionally or alternatively is used to convey a fluid within inter duct channel 122. When dual-walled fluid transportation system 10 is used to convey a fluid in central conduit 120 and a fluid in inter duct channel 122, dual-walled fluid transportation system 10 may be used to convey the same or different fluids in central conduit 120 and inter duct channel 122. Additionally or alternatively, dual-walled fluid transportation system 10 may be used to convey fluids in the same or different directions within central conduit 120 and inter duct channel 122 and/or convey fluids with different flow rates within central conduit 120 and inter duct channel 122. As a more specific example, dual-walled fluid transportation system 10 may be used to convey a fuel within central conduit 120 and an oxidizer within inter duct channel 122. As another example, dual-walled fluid transportation system 10 may be used to convey a fuel within central conduit 120 in a first direction and vent air in the reverse direction, such as when dual-walled fluid transportation system 10 is utilized during special aircraft fueling operations.

Additionally or alternatively, dual-walled fluid transportation system 10 may be used to convey a fluid in one of central conduit 120 and inter duct channel 122 and contain, or confine a fluid within the other of central conduit 120 and inter duct channel 122. Dual-walled fluid transportation system 10 additionally or alternatively may be configured convey or confine fluids at different pressures within central conduit 120 and inter duct channel 122. As an example, dual-walled fluid transportation system 10 may pressurize inter duct channel 122 with an inert gas, such as nitrogen, to a specified pressure while containing or conveying a second fluid, such as a fuel within central conduit 120. In some such examples, dual-walled fluid transportation system 10 includes a pressure sensor that is in communication with inter duct channel 122 and configured to register a pressure change within inter duct channel 122, in which the pressure change may be utilized to detect a leak in central conduit 120, a leak within inter duct channel 122, a breach in inner duct 112, and/or a breach in outer duct 102.

In some examples, outer duct 102 is configured to capture fluid that has leaked from central conduit 120 of inner duct 112, such as fluid that has leaked leaking through a fracture, breach, or imperfection in inner duct 112. In such examples, outer duct 102 is configured to confine or convey the fluid leaked from central conduit 120 within inter duct channel 122. As show in Fig. 2, in some examples, outer duct 102 is provided with an inter duct port 190 that extends through outer duct external surface 109 to inter duct channel 122 and selectively provides access to inter duct channel 122. When included, inter duct port 190 may be utilized to exhaust fluid captured within inter duct channel 122, and dual-walled fluid transportation system 10 further may include an inter duct port sealing member that is configured to selectively seal and provide access to inter duct port 190 and correspondingly inter duct channel 122.

Inner duct 112 and outer duct 102 are dimensioned and shaped to be supported such that inner duct 112 and outer duct 102 are mechanically isolated from one another. Stated yet another way, inter duct channel 122 is configured to mechanically isolate inner duct 112 and outer duct 102 from one another. Mechanical isolation of inner duct 112 and outer duct 102 from one another prevents fractures from transferring, propagating, or migrating between inner duct 112 and outer duct 102 and/or prevent defects, such as cracks due to stress fatigue or inherent material imperfections, from migrating or transferring between inner duct 112 and outer duct 102. In this way, dual-walled fluid conduit 100 is configured to isolate any mechanical defects, cracks, fractures, or material imperfections present in either of inner duct 112 and outer duct 102 to that respective body.

Inter duct channel 122 additionally or alternatively is configured to thermally insulate inner duct 112 and/or fluid within central conduit 120 from outer duct 102 and/or a space external to outer duct 102. In some examples, dual-walled fluid transportation system 10 is configured to operate with a thermal gradient or temperature gradient present between inner duct 112 and/or fluid within central conduit 120 and outer duct 102 and/or a space external to outer duct 102. In some such examples, inter duct channel 122 is configured to insulate inner duct 112 from outer duct 102 and/or the space external to outer duct 102 to limit heat transfer between inner duct 112 and/or fluid within central conduit 120 and outer duct 102 and/or the space external to outer duct 102. In some such examples, inter duct channel 122 is, or is configured to, contain or convey an insulating fluid. Additionally or alternatively, in some such examples, inter duct channel 122 is configured to be evacuated and/or is configured to maintain a reduced pressure relative to central conduit 120 and/or the space external to outer duct 102. In any such example, dual-walled fluid conduit 100 can be described as being configured to thermally insulate inner duct 112 from outer duct 102. In other examples, dual-walled fluid conduit 100 is configured to be utilized as at least a portion of a heat exchanger, in which dual-walled fluid conduit 100 is configured to transfer heat between fluid within central conduit 120 and fluid within inter duct channel 122 and/or fluid, such as air, in a space external to outer duct 102.

Dual-walled fluid conduit 100 is formed from any suitable one or more materials. Inner duct 112 and outer duct 102 may be formed from one or more of the same materials or one or more different materials. Examples of suitable materials for forming dual-walled fluid conduit 100, inner duct 112, and/or outer duct 102 include one or more metals, one or more sintered metals, one or more heat-treated metals, aluminum, aluminum alloys, aluminum silicon magnesium alloys, iron, steel, iron alloys, titanium, titanium alloys, composite materials, polymeric materials, polymers, reinforced polymers, plastics, thermoplastics ceramics, and/or combinations thereof. The one or more materials that form dual-walled fluid conduit 100 may be selected based on the desired application of dual-walled fluid conduit 100.

As shown in Fig. 2, outer duct pair of flared end regions 104 may be described as extending longitudinally and laterally outward from outer duct central region 106 such that the outer most lateral and outermost longitudinal dimensions of outer duct pair of flared end regions 104 are greater than that of outer duct central region 106. As referred to herein, longitudinally refers to a direction that is aligned with the central or long axis of dual-walled fluid conduit 100 and/or of the central or long axis of the corresponding component. Outer duct pair of flared end regions 104 terminate to form outer duct bases 152 of outer duct 102, and outer duct bases 152 may form surfaces that are configured to interface with an adjacent structure, such as an adjacent outer duct 102, another component of dual-walled fluid transportation system 10, and/or an external structure. Outer duct pair of flared end regions 104 are hollow and at least partially, or completely, surround inner duct pair of flared end regions 114. Inner duct pair of flared end regions 114 also may be described as extending longitudinally and laterally outward from inner duct central region 116 such that the outer most lateral and longitudinal dimension of inner duct pair of flared end regions 114 is greater than inner duct central region 116. Inner duct pair of flared end regions 114 terminate to form inner duct bases 144, which may form surfaces that are configured to interface with an adjacent structure, such as an adjacent inner duct 112, another component of dual-walled fluid transportation system 10, and/or an external structure.

Each inner duct flared end region of inner duct pair of flared end regions 114 and each outer duct flared end region of outer duct pair of flared end regions 104 may extend laterally and longitudinally outward to form any suitable flared angle with a central axis 101 of dual-walled fluid conduit 100. The flared angle formed by each inner duct flared end region may be the same as or different from the flared angle formed by the corresponding or adjacent outer duct flared end regions. Likewise, the inner duct flared end regions may form the same or different flared angles relative to one another and the outer duct flared end regions may form the same or different flared angles relative to one another. Stated differently, inner duct first flared end region 136 may be parallel to or angled relative to outer duct first flared end region 132 and inner duct second flared end region 138 may be parallel to or angled relative to outer duct second flared end region 134. Examples of suitable flared angles include at least 5°, at least 10°, at least 20°, at least 30°, at least 35°, at least 40°, at least 45°, at least 50°, at least 60°, at most 5°, at most 10°, at most 20°, at most 30°, at most 35°, at most 40°, at most 45°, at most 50°, at most 60°, and/or at most 80°.

Inner duct 112 and outer duct 102 may have the same or different lengths, such that inner duct bases 144 and outer duct bases 152 may be aligned or offset from one another when inner duct 112 and outer duct 102 are supported relative to one another. Inner duct pair of flared end regions 114 form any suitable fraction of the total length of inner duct 112, with examples including at least 1%, at least 5%, at least 10%, at least 20%, at least 50%, at least 75%, at least 90%, at most 1%, at most 5%, at most 10%, at most 20%, at most 50%, at most 75%, and/or at most 90%. Likewise, outer duct pair of flared end regions 104 form any suitable fraction of the total length of outer duct 102, with examples including at least 1%, at least 5%, at least 10%, at least 20%, at least 50%, at least 75%, at least 90%, at most 1%, at most 5%, at most 10%, at most 20%, at most 50%, at most 75%, and/or at most 90%.

Inner duct 112 and outer duct 102 may include any suitable shape and/or dimension relative to one another such that inner duct 112 and outer duct 102 define interlocking geometries and such that inner duct 112 and outer duct 102 are configured to be supported with inter duct channel 122 completely separating inner duct external surface 118 from outer duct internal surface 108. As examples, inner duct 112 and outer duct 102 may be shaped and dimensioned to be supported such that inner duct external surface 118 and outer duct internal surface 108 are parallel, at least substantially parallel, coaxial, and/or concentric. In some examples, inner duct 112 and outer duct 102 are configured such that inner duct external surface 118 and outer duct internal surface 108 are non-parallel. As an example, inner duct external surface 118 and/or outer duct internal surface 108 may be provided with complex shapes or surface features that facilitate flow patterns of fluid within inter duct channel 122. In a specific example, inner duct external surface 118 and/or outer duct internal surface 108 are provided with vortex-generating geometrical features that are configured to facilitate heat exchange between fluid within central conduit 120 and fluid within inter duct channel 122.

With continued reference to Fig. 2, dual-walled fluid conduit 100 includes a dual-walled central region 158 defined by inner duct central region 116 and outer duct central region 106 and a pair of dual-walled flared end regions 141 defined by inner duct pair of flared end regions 114 and outer duct pair of flared end regions 104. Dual-walled fluid conduit 100 is configured to possess any suitable cross-sectional shape. As discussed herein, the cross-sectional shape of dual-walled fluid conduit 100, or components thereof, is the shape of dual-walled fluid conduit 100, or components thereof, traverse to the length, or central axis 101, of dual-walled fluid conduit 100. Inner duct 112 and outer duct 102 may possess the same or different cross-sectional shapes. Similarly, inner duct pair of flared end regions 114 may possess the same or different cross-sectional shapes to one another and/or to inner duct central region 116, and outer duct pair of flared end regions 104 may possess the same or different cross-sectional shapes to one another and/or to outer duct central region 106. Examples of suitable inner duct 112, outer duct 102, and/or dual-walled fluid conduit 100 cross-sectional shapes include circular cross-sections, ovoid cross-sections, square cross-sections, rectangular cross-sections, triangular-cross sections, and/or polygonal cross-sections.

As shown in Fig. 2, dual-walled central region 158 of dual-walled fluid conduit 100 may include a curved configuration 160 or a linear configuration 162. In linear configuration 162, dual-walled central region 158 defines a central axis 101 that is straight or linear, and in curved configuration 160, dual-walled central region 158 defines a central axis 101 that is curved or non-linear. In some examples, curved configuration 160 includes a plurality of curves and in other examples, curved configuration 160 includes a single curve. When dual-walled central region 158 includes curved configuration 160, each curve in dual-walled central region 158 may include any suitable angle of curvature, with examples of suitable angles of curvature including at least 5°, at least 10°, at least 20°, at least 45°, at least 60°, at least 90°, at least 120°, at most 5°, at most 10°, at most 20°, at most 45°, at most 60°, at most 90°, at most 120°, and/or at most 180°. More specific examples of curved configurations 160 include an S-shaped configuration, a U-shaped configuration, an elbow, and/or one or more bends.

Inner duct pair of flared end regions 114 includes an inner duct first flared end region 136 and an inner duct second flared end region 138 opposed to inner duct first flared end region 136. Similarly, outer duct pair of flared end regions 104 comprises an outer duct first flared end region 132 and an outer duct second flared end region 134 opposed to outer duct first flared end region 132. Outer duct first flared end region 132 and inner duct first flared end region 136 define a dual-walled first flared end region 140 of dual-walled fluid conduit 100. Inner duct second flared end region 138 and outer duct second flared end region 134 define a dual-walled second flared end region 142 of dual-walled fluid conduit 100.

In some examples, dual-walled fluid conduit 100 includes a plurality of inner duct fastener bores 128 disposed around at least one of dual-walled first flared end region 140 and dual-walled second flared end region 142. Inner duct fastener bores 128 are configured to cooperate with a plurality of inner duct fasteners 130 to operatively couple inner duct 112 to an adjacent structure. In some examples, dual-walled fluid conduit 100 includes a plurality of first end inner duct fastener bores 128 that are disposed around dual-walled first flared end region 140, in which the plurality of first end inner duct fastener bores 128 extend from inner duct base 144 of inner duct first flared end region 136 through an outer duct external surface 109 of outer duct first flared end region 132. Additionally or alternatively, in some examples, dual-walled fluid conduit 100 includes a plurality of second end inner duct fastener bores 128 that are disposed around dual-walled second flared end region 142, in which the plurality of second end inner duct fastener bores 128 extend from inner duct base 144 of inner duct second flared end region 138 through outer duct external surface 109 of outer duct second flared end region 134.

As shown in Fig. 2, each inner duct fastener bore 128 may include a fastener-receiving region 127 positioned within inner duct 112 and configured to receive an inner duct fastener 130, and a seal-receiving region 129 positioned within outer duct 102 and configured to receive an inter duct sealing member 146. In this way, fastener-receiving region 127 is configured to cooperate with an inner duct fastener 130 to operably couple inner duct 112 to an adjacent structure without interconnecting inner duct 112 to outer duct 102 with inner duct fastener 130. Seal-receiving regions 129 receive inter duct sealing members 146 to partition or seal inter duct channel 122 from a space exterior to outer duct 102.

In some examples, dual-walled fluid conduit 100 comprises a plurality of outer duct fastener bores 148 positioned along at least one of dual-walled first flared end region 140 and dual-walled second flared end region 142. Outer duct fastener bores 148 are configured to cooperate with a plurality of outer duct fasteners 150 to operatively couple outer duct 102 to an adjacent structure. In some examples, dual-walled fluid conduit 100 comprises a plurality of first end outer duct fastener bores 148 positioned along the dual-walled first flared end region 140, in which the plurality of first end outer duct fastener bores 148 extend from an outer duct base 152 of outer duct first flared end region 132 through outer duct external surface 109 of the outer duct first flared end region 132. Additionally or alternatively, in some examples, dual-walled fluid conduit 100 comprises a plurality of second end outer duct fastener bores 148 positioned along dual-walled second flared end region 142, in which the plurality of second end outer duct fastener bores 148 extend from outer duct base 152 of outer duct second flared end region 134 through outer duct external surface 109 of outer duct second flared end region 134.

When dual-walled fluid conduit 100 comprises a plurality of inner duct fastener bores 128 and a plurality of outer duct fastener bores 148 positioned along the same flared end region of dual-walled fluid conduit, inner duct fasteners 130 may operably couple inner duct 112 to the same or a different adjacent structure to which outer duct fasteners 150 operably couple outer duct 102.

With continued reference to Fig. 2, in some examples, dual-walled fluid conduit 100 includes at least one inner duct sealing region 154 disposed around at least one inner duct base 144 of inner duct 112, and optionally two inner duct sealing regions 154 disposed around both inner duct bases 144. In some examples, each inner duct base 144 encompasses central conduit 120, and inner duct sealing region 154 is disposed around the surface formed by inner duct base 144. In some examples, inner duct sealing region 154 is configured to form a fluid seal between inner duct 112 and an exterior component to sealably interconnect central conduit 120 with the exterior component. In some examples, inner duct fasteners 130 are configured urge inner duct sealing region 154 against the exterior component to form the fluid seal therebetween.

Additionally or alternatively, in some examples, dual-walled fluid conduit 100 comprises at least one outer duct sealing region 156 disposed around at least one outer duct base 152 of outer duct 102. In some examples, each outer duct base 152 encompasses outer duct internal volume 110 of outer duct 102, and outer duct sealing region 156 is disposed around the surface formed by outer duct base 152. In some examples, outer duct sealing region 156 is configured to form a fluid seal between outer duct 102 and an exterior component to sealably interconnect outer duct internal volume 110 with the exterior component. In some examples, outer duct fasteners 150 are configured to urge outer duct sealing region 156 against the exterior component to form the fluid seal therebetween.

When included, inner duct sealing region 154 and/or outer duct sealing region 156 comprise any suitable structure and/or one or more materials configured to form a fluid seal between inner duct 112 and/or outer duct 102 and an exterior component. As examples, inner duct sealing region 154 may include an o-ring or a gasket that extends about inner duct base 144, and outer duct sealing region 156 may include an o-ring or a gasket that extends about outer duct base 152. Examples of suitable materials for forming inner duct sealing region 154 and/or outer duct seal sealing region 156 include resilient materials, sealing materials, one or more polymers, one or more resilient polymers, one or more silicones, one or more heat-resistant polymers, graphite, ceramics, rubber, fluoropolymers, polyamides, and/or combinations thereof.

With continued reference to Fig. 2, in some examples, dual-walled fluid transportation systems 10 include a plurality of dual-walled fluid conduits 100. In such examples, dual-walled fluid conduits 100 are configured to be operably interconnected with one another to form one or more continuous or extended dual-walled fluid conduits 100. In some examples, adjacent dual-walled fluid conduits 100 are configured to directly interconnect with one another, and in other examples dual-walled fluid transportation systems 10 include one or more interconnecting members that are configured to interconnect, interface, or facilitate connection between adjacent dual-walled fluid conduits 100.

As shown on the left side in Fig. 2, in some examples, dual-walled fluid transportation systems 10 include at least one connecting plate 170, and optionally a plurality of connecting plates 170. Connecting plate 170 is configured to interconnect adjacent dual-walled fluid conduits 100 to one another and support inner ducts 112 and outer ducts 102 of the adjacent dual-walled fluid conduits 100 such that inter duct channels 122 completely separate inner duct external surfaces 118 from outer duct internal surfaces 108 at least proximate connecting plate 170. In some examples, dual-walled fluid conduit 100 is interconnected at both ends to two connecting plates 170, such that connecting plates 170 support outer duct 102 and inner duct 112 spaced apart with inter duct channel 122 extending therebetween along the entire length of dual-walled fluid conduit 100.

In some examples, connecting plate 170 comprises a connecting plate central conduit 172 that is configured to provide fluid communication between central conduits 120 of the adjacent dual-walled fluid conduits 100. In a more specific example, connecting plate central conduit 172 comprises a bore that extends through connecting plate 170 to fluidly interconnect central conduits 120, and may be dimensioned correspondingly to central conduits 120. In some examples, connecting plate 170 comprises a fluid-permeable inter duct region 174 configured to provide fluid communication between inter duct channels 122 of the adjacent dual-walled fluid conduits 100. In more specific examples, fluid-permeable inter duct region 174 comprises a plurality of bores that extend through connecting plate 170 to fluidly interconnect inter duct channels 122 of the adjacent dual-walled fluid conduits 100. In this way, connecting plate 170 may be formed from a monolithic body.

In some examples, connecting plate 170 comprises a plurality of outer duct coupling portions 176 configured to operatively couple outer ducts 102 of the adjacent dual-walled fluid conduits 100 to connecting plate 170, and/or a plurality of inner duct coupling portions 178 configured to operatively couple inner ducts 112 of the adjacent dual-walled fluid conduits 100 to connecting plate 170. In some examples, outer duct coupling portions 176 receive outer duct fasteners 150 that engage with outer duct fastener bores 148 and/or inner duct coupling portions 178 receive inner duct fasteners 130 that are engaged with inner duct fastener bores 128. When included, outer duct coupling portions 176 are configured to support at least the portions of the adjacent outer ducts 102 that are proximate connecting plate 170 in desired positions, which may include aligning the adjacent outer ducts 102 with one another, aligning outer ducts 102 with corresponding inner ducts 112, and/or aligning outer ducts 102 with fluid-permeable inter duct region 174. Likewise, when included, inner duct coupling portions 178 are configured to support at least the portions of the adjacent inner ducts 112 that are proximate connecting plate 170 in desired positions, which may include aligning the adjacent inner ducts 112 with one another, aligning the adjacent central conduits 120 with one another, and/or aligning inner ducts 112 with outer ducts 102 of respective dual-walled fluid conduits 100. In some examples, connecting plate 170 is configured to couple to an adjacent structure to support or position the adjacent the dual-walled fluid conduits 100 relative to the adjacent structure and/or to support or position a portion of dual-walled fluid transportation system 10 relative to the adjacent structure.

For some examples in which inner duct 112 comprises inner duct sealing region 154, inner duct sealing region 154 is configured to form a fluid seal with connecting plate 170 that surrounds connecting plate central conduit 172 and permits fluid communication between connecting plate central conduit 172 and central conduit 120. Likewise, for some examples in which outer duct 102 comprises outer duct sealing region 156, outer duct sealing region 156 forms a fluid seal with connecting plate 170 that surrounds fluid-permeable inter duct region 174 and permits fluid communication between inter duct channel 122 and fluid-permeable inter duct region 174.

Connecting plate 170 may be formed from one or more of the same and/or one or more different materials as dual-walled fluid conduit 100. In some examples, connecting plate 170 comprises a monolithic construction and in other examples, connecting plate 170 is formed from a plurality of subcomponents. In some examples, connecting plate 170 is dimensioned and/or shaped to correspond to the outer most dimension of outer duct 102.

As shown on the right side in Fig. 2, in some examples, dual-walled fluid transportation system 10 comprises at least one connecting ring 180, and optionally a plurality of connecting rings 180. Connecting ring 180 is configured to be positioned between inner duct base 144 and outer duct base 152 of dual-walled fluid conduit 100 and support inner duct 112 and outer duct 102 with inter duct channel 122 completely separating inner duct external surface 118 from outer duct internal surface 108 at least proximate connecting ring 180. In some examples, connecting ring 180 is configured to interface, index, align, and/or support inner ducts 112 and outer ducts 102 of adjacent dual-walled fluid conduits 100 relative to one another. More specifically, connecting ring 180 is dimensioned and shaped to extend between and be positioned within end regions of inter duct channels 122 of adjacent dual-walled fluid conduits 100 and support inner duct bases 144 and outer duct bases 152 of each adjacent dual-walled fluid conduit 100 spaced apart with inter duct channels 122 extending therebetween. In some examples, a connecting ring 180 is installed in either dual-walled flared end region of a dual-walled fluid conduit 100 such that the two connecting rings 180 support outer duct 102 spaced apart from inner duct 112 such that inter duct channel 122 separates inner duct external surface 118 from outer duct internal surface 108 along the entire length of dual-walled fluid conduit 100.

When included, connecting ring 180 may be dimensioned to correspond to the inner-most lateral dimension of outer duct base 152 and the outer-most lateral dimension of inner duct base 144. When connecting ring 180 interfaces and supports inner ducts 112 and outer ducts 102 of adjacent dual-walled fluid conduits 100, connecting ring 180 may be configured to provide fluid communication between the inter duct channels 122 of the adjacent dual-walled fluid conduits 100. As discussed in more detail here, some connecting rings 180 comprise a connecting ring body defining an inner radial surface and an outer radial surface, and further comprise a plurality of offset indentations disposed around the inner radial surface and the outer radial surface that provide fluid communication between inter duct channels 122. Connecting ring 180 is formed from any suitable one or more materials, with examples including resilient materials, sealing materials, one or more polymers, one or more resilient polymers, one or more silicones, one or more heat-resistant polymers, graphite, ceramics, rubber, fluoropolymers, polyamides, and/or combinations thereof.

In some examples, connecting ring 180 is configured to permit inner ducts 112 and outer ducts 102 of adjacent dual-walled fluid conduits 100 to couple directly with one another. In a specific example, one or two sets of inner duct fasteners 130 are engaged with inner duct fastener bores 128 of each adjacent inner duct 112 to sealably interconnect adjacent inner duct bases 144 of the adjacent inner ducts 112 with one another, and outer duct fasteners 150 are engaged with outer duct fastener bores 148 of each adjacent outer duct 102 to sealably interconnect outer duct bases 152 with one another. Connecting ring 180 is installed within the end regions of inter duct channels 122 and supports inner ducts 112 at a desired radial separation from outer ducts 102 and/or centers inner ducts 112 within outer ducts 102 while providing fluid communication between inter duct channels 122 of adjacent dual-walled fluid conduits 100. In this way, connecting ring 180 provides support for, and fluidly interconnects, inter duct channels 122 of the adjacent dual-walled fluid conduits 100 without mechanically coupling inner ducts 112 to outer ducts 102 and permits direct coupling of adjacent dual-walled fluid conduits 100.

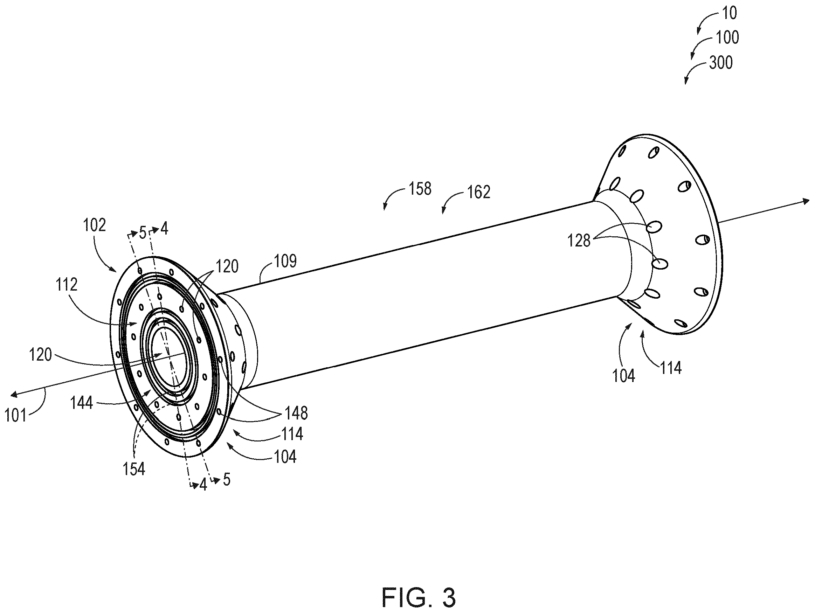

Turning now to Figs. 3-10, illustrative non-exclusive examples of dual-walled fluid transportation systems 10, dual-walled fluid conduits 100, connecting plates 170, and connecting rings 180 are illustrated. Where appropriate, the reference numerals from the schematic illustration of Fig. 2 are used to designate corresponding parts of Figs. 3-10; however, the examples of Figs. 3-10 are non-exclusive and do not limit dual-walled fluid transportation systems 10 to the illustrated embodiments of Figs. 3-10. That is, dual-walled fluid transportation systems 10 are not limited to the specific embodiments of the illustrated dual-walled fluid conduits 100, connecting plates 170, and connecting rings 180 of Figs. 3-10, and dual-walled fluid transportation systems 10 may incorporate any number of the various aspects, configurations, characteristics, properties, etc. of dual-walled fluid conduits 100, connecting plates 170, and connecting rings 180 that are illustrated in and discussed with reference to the schematic representations of Fig. 2 and/or the embodiments of Figs. 3-10, as well as variations thereof, without requiring the inclusion of all such aspects, configurations, characteristics, properties, etc. For the purpose of brevity, each previously discussed component, part, portion, aspect, region, etc. or variants thereof of dual-walled fluid transportation systems 10 may not be discussed, illustrated, and/or labeled again with respect to Figs. 3-10; however, it is within the scope of the present disclosure that the previously discussed features, variants, etc. may be utilized with Figs. 3-10.

Figs. 3-5 illustrate a first example of dual-walled fluid conduit 100 indicated at and referred to herein as dual-walled fluid conduits 300. Dual-walled fluid conduit 300 is an example of dual-walled fluid conduits 100 in which dual-walled central region 158 comprises linear configuration 162, and dual-walled pair of flared end regions 141 extend longitudinally and laterally outward from dual-walled central region 158 with corresponding flared angles. Inner duct 112 and outer duct 102 comprise circular cross-sectional shapes, such that outermost lateral dimension of inner duct 112 is the diameter of inner duct base 144. Inner duct 112 and outer duct 102 are dimensioned such that inner duct base 144 and outer duct base 152 are aligned or flush with one another. Inner duct 112 comprises inner duct sealing region 154, which in this example, comprises a pair of concentric grooves that extend along inner duct base 144 surrounding central conduit 120 and are configured to receive o-ring that extend outwardly from inner duct base 144. Outer duct 102 comprises outer duct sealing region 156, which in this example, comprises a concentric groove that extends around outer duct base 152 and is configured to receive an o-ring that extends outwardly from outer duct base 152. Inner duct sealing region 154 is configured to fluidly isolate central conduit 120 from inter duct channel 122, and outer duct sealing region 156 fluidly isolates inter duct channel 122 from a region exterior to outer duct 102.

Further shown, dual-walled fluid conduit 300 comprises inner duct fastener bores 128 and outer duct fastener bores 148 that extend parallel to central axis 101 of dual-walled fluid conduit 300. Inner duct fastener bores 128 extend through outer duct external surface 109 of outer duct pair of flared end regions 104, through inner duct external surface 118 of inner duct pair of flared end regions 114 and out of inner duct bases 144 of inner duct pair of flared end regions 114. Outer duct fastener bores 148 are positioned laterally outside of the outermost lateral dimension of inner duct 112 and extend through outer duct external surface 109 of outer duct pair of flared end regions 104 through outer duct bases 152. In this example, inner duct fastener bores 128 and outer duct fastener bores 148 are radially offset from one another, which may improve the strength of outer duct 102 and/or reduce the propensity for stress fractures to form between inner duct fastener bores 128 and outer duct fastener bores 148.

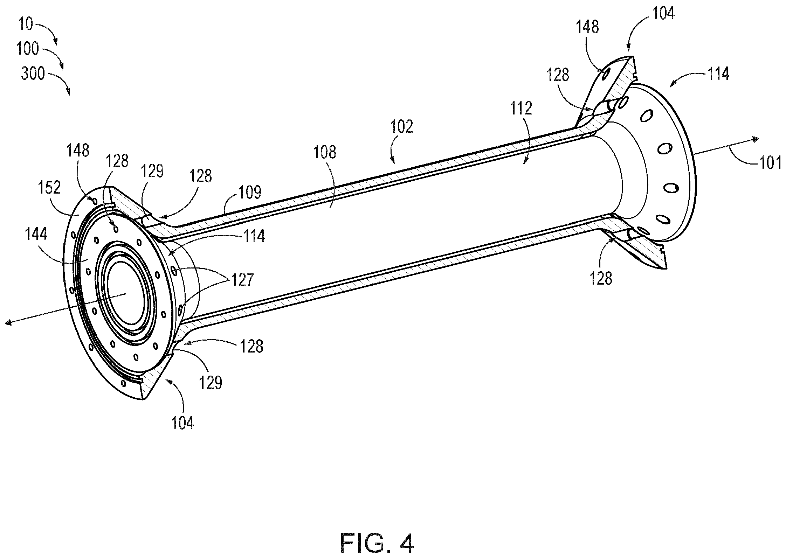

As best seen in Fig. 4, dual-walled fluid conduit 300 comprises inner duct fastener bores 128 and outer duct fastener bores 148 that extend parallel to central axis 101 of dual-walled fluid conduit 300. Inner duct fastener bores 128 extend through outer duct external surface 109 of outer duct pair of flared end regions 104, through inner duct external surface 118 of inner duct pair of flared end regions 114 and out of inner duct bases 144 of inner duct pair of flared end regions 114. Outer duct fastener bores 148 are positioned laterally outside of the outermost lateral dimension of inner duct 112 and extend through outer duct external surface 109 of outer duct pair of flared end regions 104 through outer duct bases 152. In this example, inner duct fastener bores 128 and outer duct fastener bores 148 are radially offset from one another, which may improve the strength of outer duct 102 and/or reduce the propensity for stress fractures to form between inner duct fastener bores 128 and outer duct fastener bores 148.

Inner duct fastener bores 128 comprise seal-receiving regions 129 positioned within outer duct pair of flared end regions 104 and configured to receive inter duct sealing members 146 that, when received in seal-receiving regions 129, fluidly isolate inter duct channel 122 from the outside of outer duct 102. Inner duct fastener bores 128 further comprise fastener-receiving regions 127 positioned within inner duct pair of flared end regions 114 and configured to receive inner duct fasteners 130. In this way, inner duct fastener bores 128 are configured such that the inner duct fasteners 130 only engage with inner duct 112 and do not mechanically interconnect inner duct 112 and outer duct 102.

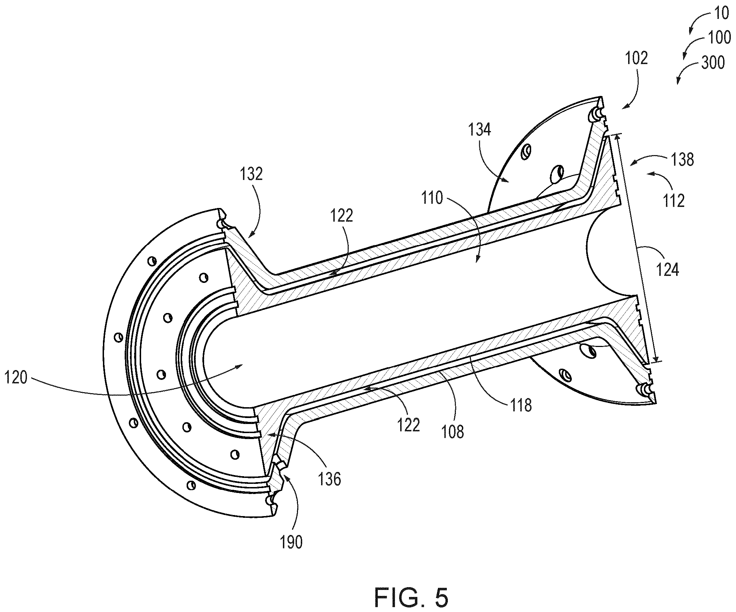

As best seen in Fig. 5, inner duct 112 is dimensioned and shaped to be positioned within outer duct internal volume 110 with inter duct channel 122 separating inner duct external surface 118 and outer duct internal surface 108. Inner duct outer-most lateral dimension 124 of inner duct first flared end region 136 and inner duct second flared end region 138 is greater than outer duct channel outer-most lateral dimension 126 of outer duct central region 106, such that inner duct 112 and outer duct 102 define interlocking geometries. In this example, inner duct 112 and outer duct 102 are dimensioned and shaped such that inner duct external surface 118 and outer duct internal surface 108 are substantially parallel to one another along the entire length of dual-walled fluid conduit 300.

Dual-walled fluid conduit 300 further includes inter duct port 190 that extends through outer duct external surface 109 to inter duct channel 122 to selectively provide access to inter duct channel 122 from exterior to outer duct 102. In some examples, inter duct port 190 is configured to receive an inter duct port sealing member that selectively seals and provides access to inter duct port 190. In some examples, inter duct port 190 is utilized to exhaust fluid that has entered inter duct channel 122 from a central conduit 120 through a breach in inner duct 112. Additionally or alternatively, inter duct port 190 may include one or more sensors, such as pressure and/or flow sensors, that are configured to detect various physical indicators, such as flow and/or pressure, of fluid within inter duct channel 122.

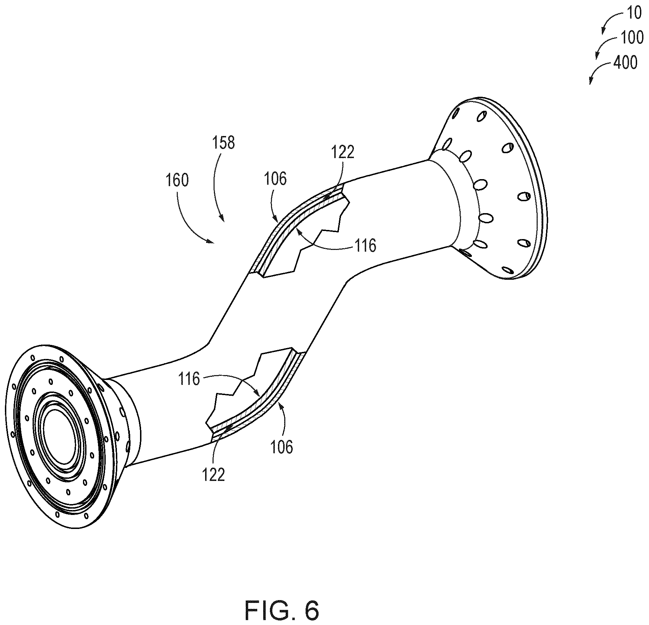

Fig. 6 shows an example of a dual-walled fluid conduit 100 indicated at and referred to herein as dual-walled fluid conduits 400. As shown in Fig. 6, dual-walled central region 158 of dual-walled fluid conduit 400 comprises curved configuration 160, such that central axis 101 of dual-walled fluid conduit is curved and/or non-linear. In this particular example, curved configuration 160 comprises two curves that form an S-shaped configuration. In curved configuration 160, inner duct central region 116 and outer duct central region 106 comprise corresponding curves, such that inner duct external surface 118 and outer duct internal surface 108 are non-contacting with inter duct channel 122 extending therebetween. Curved configuration 160 of dual-walled central region 158 may permit dual-walled fluid conduit 400, and thus dual-walled fluid transportation system 10, to extend around features of an adjacent structure, interconnect fluid inlets and outlets that are spatially offset from one another, and/or convey or transport one or more fluids in along a non-linear path.

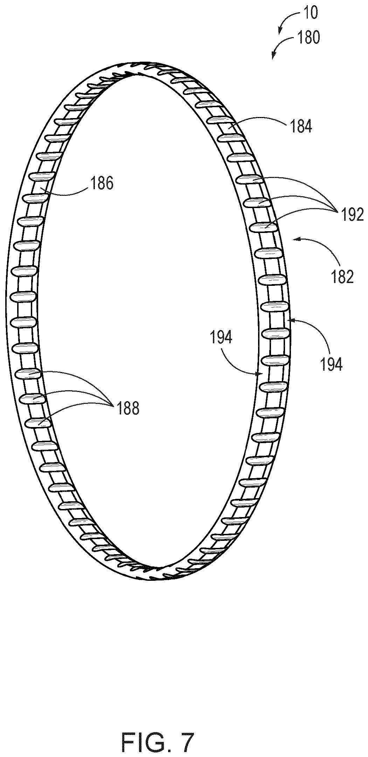

Fig. 7 is shows an example connecting ring 180 that may be included in and/or utilized with dual-walled fluid transportation systems 10 according to the present disclosure. As shown in Fig. 7, connecting ring 180 comprises a connecting ring body 182 defining an outer radial surface 184 and an inner radial surface 186 opposed to outer radial surface 184. Connecting ring body 182 comprises a plurality of inside indentations 188 disposed around inner radial surface 186 and a plurality of outside indentations 192 disposed around outer radial surface 184. Inside indentations 188 and outside indentations 192 also may be described as including a plurality of notches, channels, and/or recesses.

When connecting ring 180 is positioned within end regions of inter duct channels 122 of adjacent dual-walled fluid conduits 100, inner radial surface 186 contacts adjacent inner ducts 112 and outer radial surface 184 contacts adjacent outer ducts 102. Inside indentations 188 and outside indentations 192 extend between inter duct channels 122 of the adjacent dual-walled fluid conduits 100 to provide fluid communication therebetween. In the example shown, inside indentations 188 and outside indentations 192 are radially offset from one another, which may improve the strength of connecting ring 180 and/or improve fluid flow through connecting ring 180. Connecting ring 180 further includes lateral edge regions 194 that extend between outer radial surface 184 and inner radial surface 186. In some examples, lateral edge regions 194 are provided with a hydrodynamic geometry that is configured to reduce fluid flow resistance across connecting ring 180.

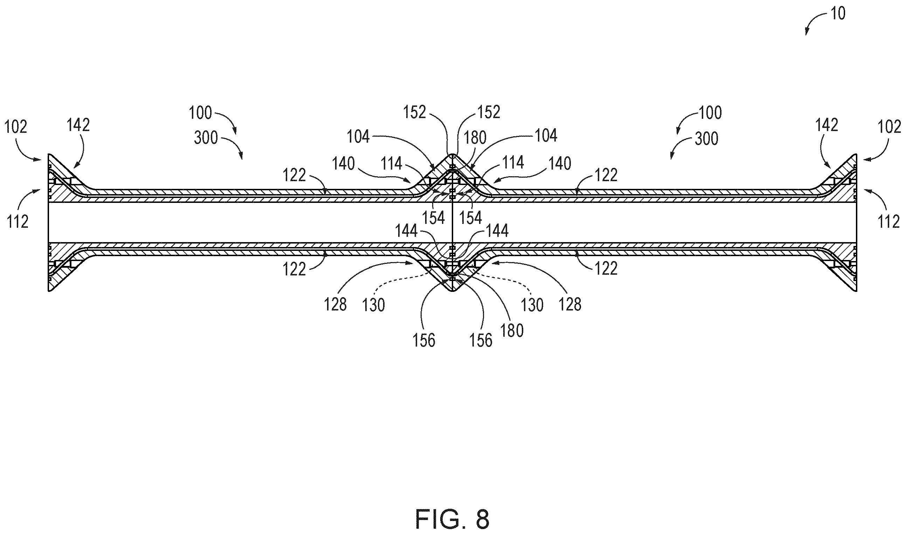

Fig. 8 shows an example of adjacent dual-walled fluid conduits 300 directly connected with one another. As shown, connecting ring 180 extends within an end region of inter duct channel 122 of each dual-walled fluid conduit 300 to support inner ducts 112 spaced apart from outer ducts 102 and provide fluid communication between inter duct channels 122. Inner duct fastener bores 128 are aligned such that inner duct fasteners 130 may directly interconnect inner ducts 112 to one another. The outer duct fasteners 150 also are aligned such that outer ducts 102 may be directly coupled with one another. Further shown, the flared angle and skirt formed by inner duct flared end regions 114 and outer duct flared end regions 104 provides inter duct channels 122 with a tapered geometry that limits movement of connecting ring 180 away from the interface between the adjacent dual-walled fluid conduits 300 and/or away from the end regions of inter duct channels 122. In some examples, connecting ring 180 is configured to provide a sliding interface between inner ducts 112 and outer ducts 102. In particular, in some such examples, connecting ring 180 is configured to permit inner ducts 112 and outer ducts 102 to slide relative to one another to avoid load transfer therebetween that may be caused by factors such as thermal expansion and/or contraction and/or axial displacements due to pressure differentials.

In Fig. 8, inner duct fastener bores 128 of each dual-walled fluid conduit 300 are equivalent, such that mating fasteners may be inserted into inner duct fastener bores 128 of either dual-walled fluid conduit 300 to couple inner ducts 112 with one another. Alternatively, the adjacent dual-walled fluid conduits 300 may include dissimilar inner duct fastener bores 128 and inner duct fasteners 130 may be inserted through inner duct fastener bores 128 of one dual-walled fluid conduit 300 to be received by inner duct fastener bores 128 of the other dual-walled fluid conduit 300. Similarly, in some examples, equivalent inner duct sealing regions 154 are disposed around inner duct bases 144 and/or equivalent outer duct sealing regions 156 are disposed around outer duct bases 152. In other examples, one dual-walled fluid conduit 300 is provided with a protruding inner duct sealing region 154 that is received by inner duct sealing region 154 of the other dual-walled fluid conduit 300 and/or one dual-walled fluid conduit 300 is provided with a protruding outer duct sealing region 156 that is received by outer duct sealing region 156 of the other dual-walled fluid conduit 300. More generally, it is within the scope of the present disclosure that dual-walled first flared end region 140 may include the same or different components, features, dimensions, and/or geometries as dual-walled second flared end region 142.

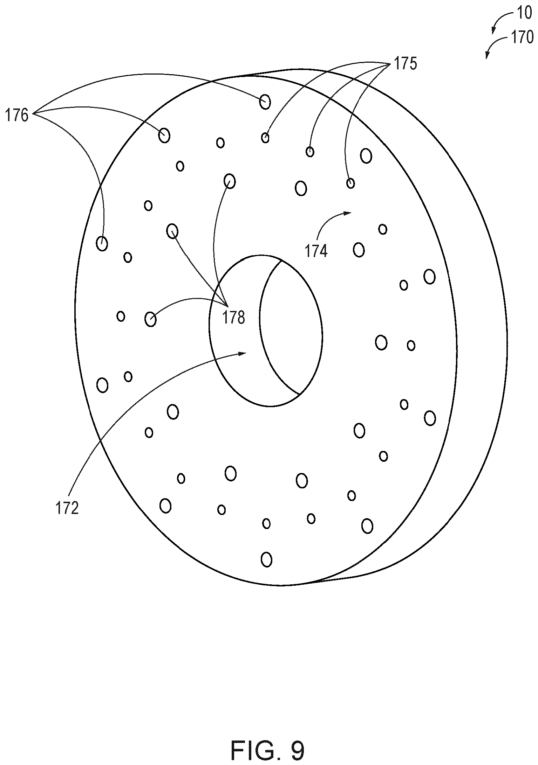

Fig. 9 illustrates an example connecting plate 170, according to the present disclosure. In this example, connecting plate 170 comprises a monolithic construction defining a hollow cylindrical shape, with connecting plate central conduit 172 extending laterally through a central region of connecting plate 170. The opposing faces of connecting plate 170 comprise outer duct coupling portions 176 configured and positioned to receive outer duct fasteners 150 and inner duct coupling portions 178 configured and positioned to receive inner duct fasteners 130. Fluid-permeable inter duct region 174 comprises a plurality of bores 175 that extend between the opposing faces of connecting plate 170, such as parallel to connecting plate central conduit 172. Bores 175 are positioned around connecting plate 170 radially between inner duct coupling portions 178 and outer duct coupling portions 176 and correspondingly with the inter duct channels of the dual-walled fluid conduits that connecting plate 170 is configured to interconnect. Inner duct coupling portions 178 and/or outer duct coupling portions 176 may include tapped bores that extend partially into connecting plate 170 from either face of connecting plate 170, and/or inner duct coupling portions 178 and/or outer duct coupling portions 176 may include bores that extend through either face of connecting plate 170.

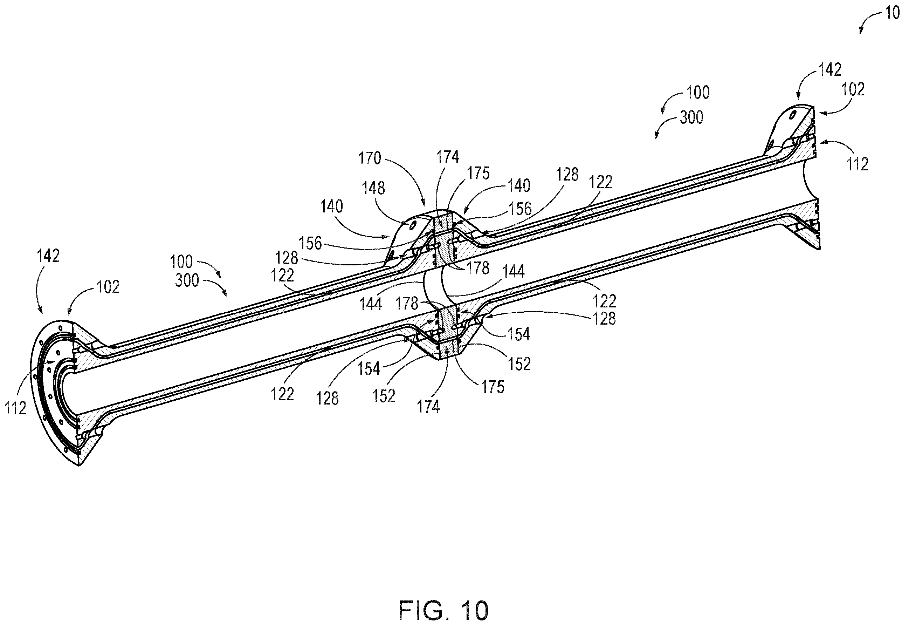

Fig. 10 illustrates an example of connecting plate 170 interconnecting adjacent dual-walled fluid conduits 300 according to the present disclosure. The cross-section shown in Fig. 10 is taken along a line extending through opposed inner duct fastener bores 128. In this example, connecting plate 170 is dimensioned and shaped to correspond to the outer-most dimension of outer ducts 102 and connecting plate central conduit 172 is aligned with central conduits 120. Bores 175 of fluid-permeable inter duct region 174 are aligned with and interconnect between inter duct channels 122 of dual-walled fluid conduits 300 to provide fluid communication therebetween. Inner duct fastener bores 128 are aligned with inner duct coupling portions 178 disposed on either face of connecting plate 170 such that inner duct fasteners 130 may interconnect inner duct fastener bores 128 and inner duct coupling portions 178 to support inner duct bases 144 against either face of connecting plate 170 and position inner ducts 112 relative to outer ducts 102 and connecting plate central conduit 172. Inner duct coupling portions 178 comprise tapped bores in this example. Likewise, outer duct fastener bores 148 are aligned with outer duct coupling portions 176 disposed on either face of connecting plate 170 such that outer duct fasteners 150 may interconnect outer duct fastener bores 148 and outer duct coupling portions 176 to support outer duct bases 152 against either face of connecting plate 170 and position outer ducts 102 relative to inner ducts 112 and fluid-permeable inter duct region 174. In this way, connecting plate 170 together with inner duct fasteners 130 and outer duct fasteners 150 support inner duct 112 and outer duct 102 spaced apart with inter duct channel 122 extending therebetween. As dual-walled fluid conduits 300 are operatively coupled to one another via inner duct coupling portions 178 and outer duct coupling portions 176 of connecting plate 170, connecting plate 170 may permit adjacent dual-walled fluid conduits 300 to include and/or utilize identical inner duct fastener bores 128, identical inner duct fasteners 130, identical outer duct fastener bores 148, and/or identical outer duct fasteners 150. Stated differently, connecting plate 170 may each permit dual-walled fluid conduit 300 to include and/or utilize a dual-walled first flared end region 140 that is identical to dual-walled second flared end region 142.

Further shown in Fig. 10, each inner duct base 144 is provided with inner duct sealing region 154 that forms a fluid seal with connecting plate 170 that surrounds connecting plate central conduit 172, and each outer duct base 152 is provided with an outer duct sealing region 156 that forms a fluid seal with connecting plate 170 that surrounds fluid-permeable inter duct region 174.

While Figs. 8 and 10 illustrate examples in which two dual-walled fluid conduits 300 are interconnected to one another with connecting ring 180 or connecting plate 170, dual-walled fluid transportation system 10 may include any suitable number of interconnected dual-walled fluid conduits 100 and a plurality of connecting rings 180 and/or a plurality of connecting plates 170 that interconnect any suitable number of dual-walled fluid conduits 100 with one another in an end-to-end manner. Additionally, while the examples of Figs. 8 and 10 illustrate examples in which connecting ring 180 and connecting plate 170 are utilized to interconnect dual-walled fluid conduits 300, these examples equally apply to other examples of dual-walled fluid conduits 100, such as dual-walled fluid conduits 400 having dual-walled central regions 158 with curved configurations 160. Moreover, connecting ring 180 and/or connecting plate 170 additionally or alternatively may be utilized to interconnect dual-walled fluid conduit 100 to an adjacent structure other than an adjacent dual-walled fluid conduit 100, such as a fluid inlet or a fluid outlet of a fluid-handling system.

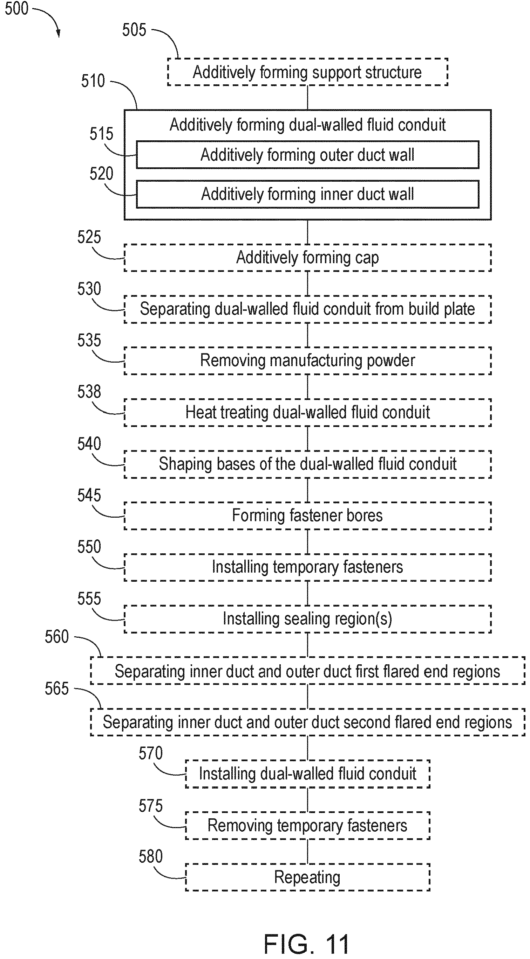

Fig. 11 provides a flowchart that schematically represents illustrative, non-exclusive examples of methods 500 according to the present disclosure. Methods 500 include methods for forming dual-walled fluid conduit 100, and further may include installing dual-walled fluid conduit 100 within a fluid-handling system and/or methods of forming dual-walled fluid transportation systems 10. In Fig. 11, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 11 are not limiting and other methods and steps are within the scope of the present disclosure, including methods having greater than or fewer than the number of steps illustrated, as understood from the discussions herein. Additionally, methods 500 are not limited to the sequence of steps illustrated in Fig. 11, and the steps of methods 500 may be performed with any suitable sequence or timing relative to one another without departing from the scope of the present disclosure.

Each step or portion of methods 500 may be performed to form, and optionally assemble and/or install dual-walled fluid conduits 100 and/or dual-walled fluid transportation systems 10 and/or portions thereof that are discussed in detail herein with reference to Figs. 1-10. Thus, dual-walled fluid conduits 100 and/or dual-walled fluid transportation systems 10 formed according to methods 500 may include any of the features, functions, components, aspects, etc. to those discussed herein with reference to Figs. 1-10 without requiring all such features, functions, components, aspects, etc. Likewise, dual-walled fluid transportation systems 10 and/or dual-walled fluid conduits 100 illustrated and discussed herein with reference to Figs. 1-10 may include any of the features, functions components, aspects, etc. discussed with reference to Figs. 11-13 and methods 500 without requiring all such features, functions, components, aspects, etc.

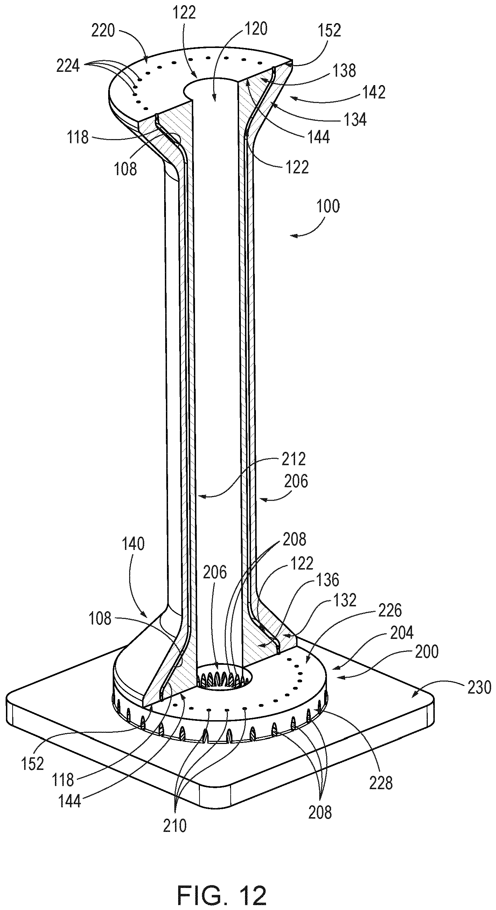

To more clearly illustrate the steps of methods 500 that are schematically represented in Fig. 11, the following discussion makes reference to Figs. 12-13, which illustrate specific examples of structures that may be formed by performing one or more steps of methods 500. However, methods 500 are not limited to the specific examples illustrated in Figs. 12-13 and the structures formed by performing one or more steps of methods 500 may include variations of the structures illustrated in Figs. 12-13 as well as other structures than the specific examples illustrated in Figs. 12-13 and/or may include any of the configurations, aspects, characteristics, properties, components, and/or features of the specific examples illustrated in Figs. 12-13, as well as variations thereof without including all such configurations, aspects, characteristics, properties, components, and/or features.

As shown in Fig. 11, methods 500 comprise additively forming dual-walled fluid conduit at 510, which comprises additively forming an outer duct wall that surrounds an outer duct internal volume at 515 and additively forming an inner duct wall within the outer duct internal volume at 520. In some examples, methods 500 comprise additively forming a support structure on a build plate for supporting the dual-walled fluid conduit at 505. Methods 500 also may include additively forming a cap that interconnects the inner duct wall and the outer duct wall at 525, separating dual-walled fluid conduit from the build plate at 530, removing manufacturing powder from dual-walled fluid conduit at 535, heat treating dual-walled fluid conduit at 538, shaping bases of dual-walled fluid conduit at 540, forming fastener bores in dual-walled fluid conduit at 545, installing temporary fasteners at 550, installing sealing regions at 555, separating inner duct wall and outer duct wall first flared end regions at 560, and/or separating inner duct wall and outer duct wall from a second flared end region at 565. Methods 500 further may include installing dual-walled fluid conduit at 570, removing temporary fasteners at 575 and/or repeating at 580.

Additively forming dual-walled fluid conduit 100 at 510 may include additively forming any of the dual-walled fluid conduits 100 that are illustrated and discussed herein with reference to Figs. 2-11. The additively forming at 510 additionally or alternatively may be referred to as additively manufacturing and/or 3D printing dual-walled fluid conduit 100. The additively forming at 510 comprises any suitable method of additively forming, with examples including powder fusion, such as powder bed fusion, selective laser sintering, electron beam melting, and/or selective laser melting. Additional examples of suitable methods of additively forming dual-walled fluid conduit 100 include material extrusion, material jetting, sheet lamination, direct energy deposition, which may include powder fusion, and/or binder jetting. With this in mind, the additively forming at 510 comprises utilizing any suitable material precursor for additively forming dual-walled fluid conduit 100, which may be selected based on the particular method of additively forming and/or the application of dual-walled fluid conduit 100.

As shown in Fig. 11, the additively forming dual-walled fluid conduit 100 at 510 comprises additively forming at 515 an outer duct wall that surrounds an outer duct internal volume 110 and defines an outer duct first flared end region 132 and an opposed outer duct second flared end region 134. The additively forming the dual-walled fluid conduit 100 at 510 further includes additively forming at 520 an inner duct wall within outer duct internal volume 110 with inter duct channel 122 completely separating inner duct external surface 118 of the inner duct wall from outer duct internal surface 108 of the outer duct wall in which the inner duct wall surrounds central conduit 120 and defines an inner duct first flared end region 136 and an opposed inner duct second flared end region 138. Inner duct wall and outer duct wall define interlocking geometries, such as discussed in more detail herein.

The additively forming the inter duct wall at 520 includes additively forming inner duct 112 and/or is performed as a portion of additively forming inner duct 112. Likewise, additively forming outer duct 102 includes additively forming outer duct 102 and/or is performed as a portion of additively forming outer duct 102. In particular, the inner duct wall forms inner duct 112 and the outer duct wall forms the outer duct 102 when the inner duct wall and the outer duct wall are mechanically disconnected from one another. In some examples, the additively forming at 515 and the additively forming at 520 comprise forming the inner duct wall and the outer duct wall with no structure interconnecting therebetween such that the additively forming at 520 comprises forming the inner duct 112 and the additively forming at 515 comprises forming outer duct 102. In other examples, the additively forming dual-walled fluid conduit 100 at 510 includes additively forming temporary interconnecting support structures that interconnect inner duct wall and outer duct wall and support inner duct wall and outer duct wall relative to one another during one or more subsequent steps of methods 500. Utilizing the temporary interconnecting support structures may be particularly desirable when dual-walled fluid conduit 100 and/or various components thereof, such as the inner duct wall and/or the outer duct wall, include complex structures that exceed the 45° overhang limitation known to those of skill in the art of additive manufacturing. In such examples, methods 500 further include removing the temporary interconnecting structures, such as via chemical milling, to mechanically disconnect inner duct wall from outer duct wall and form inner duct 112 and outer duct 102 therefrom.

Additionally or alternatively, in some examples, the additively forming at 510 is performed on a build plate. In some such examples, the build plate is mounted on a multi-axis platform, for example, a 5-axis system, which may permit the build plate to rotate and tilt during the additively forming at 510. Rotation and tilting of the build plate may allow for more aggressive geometries to be formed in the inner duct wall and/or the outer duct wall during the additively forming at 510, such as complex structures that exceed the 45° overhang limitation, without requiring the use of temporary support structures or the like. Utilizing such a multi-axis platform may be particularly beneficial when the additively forming at 510 utilities direct energy deposition, and/or related techniques.

The additively forming at 515 and the additively forming at 520 may comprise additively forming the inner duct wall from one or more of the same or one or more different materials as the outer duct wall. As examples, the inner duct wall and the outer duct wall may be formed from additive manufacturing precursors corresponding to any of the one or more materials discussed herein that may form inner duct 112 and/or outer duct 102. As a more specific example, when inner duct 112 and/or outer duct 102 are formed from one or more metals, and the additively forming at 515 and/or the additively forming at 520 comprises powder fusion, the additively forming at 515 and/or the additively forming at 520 comprise utilizing one or more metal manufacturing powders as a precursor to form the inner duct wall and/or the outer duct wall.

The additively forming the inner duct wall at 520 and the additively forming the outer duct wall at 515 may be performed with any suitable sequence or timing within methods 500, such as at least substantially simultaneously with one another, subsequent to additively forming the support structure at 505, prior to the additively forming the cap at 525, prior to or substantially simultaneously with shaping bases of dual-walled fluid conduit at 540 and/or forming fastener bores at 545.

In some examples, the additively forming dual-walled fluid conduit 100 at 510 comprises additively forming dual-walled fluid conduit 100 on a build plate. As shown in Fig. 11, in some such examples, methods 500 comprise additively forming a support structure on the build plate at 505, and the additively forming at 510 comprises additively forming dual-walled fluid conduit 100 on the support structure. The support structure may be configured to support dual-walled fluid conduit 100 on the build plate, temporarily interconnect dual-walled fluid conduit 100 to the build plate, and/or support the inner duct wall relative to the outer duct wall during the forming at 515, the forming at 520, and/or one or more subsequent steps of methods 500.

In some such examples, the additively forming at 510 comprises interconnecting inner duct first flared end region 136 of the inner duct wall and outer duct first flared end region 132 of outer duct wall 202 to a connecting portion of the support structure to interconnect inner duct first flared end region 136 to outer duct first flared end region 132. In such examples, the support structure supports the inner duct wall and the outer duct wall relative to one another such that inter duct channel 122 separates inner duct external surface 118 from outer duct internal surface 108. In some such examples, the additively forming at 505 and the additively forming at 510 comprise forming the support structure and dual-walled fluid conduit as a single structure and/or as a monolithic body. When included, the additively forming the support structure at 505 is performed with any suitable sequence or timing within methods 500, such as prior to the additively forming at 510, the additively forming at 520, and/or the additively forming at 525.

Fig. 12 is a partial cross-sectional view illustrating examples of a support structure 200 that may be formed during the additively forming at 505 and/or that may be utilized during the additively forming at 510. In particular, Fig. 12 shows a cross-section of an example dual-walled fluid conduit 100 formed during the additively forming at 510 and supported on support structure 200 formed during the additively forming at 505. As shown, support structure 200 supports dual-walled fluid conduit 100 on a build plate 230, and the additively forming at 510 may be described as additively forming dual-walled fluid conduit 100 onto or upwardly from support structure 200. Inner duct wall first flared end region 136 of inner duct wall 212, and outer duct wall first flared end region 132 of outer duct wall 202 are interconnected with, and/or integrally formed with support structure 200, such that support structure 200 supports inner duct wall 212 and outer duct wall 202 spaced apart with inter duct channel 122 extending therebetween. In some examples, the additively forming the support structure at 505 comprises utilizing the same materials as the additively forming at 510 and/or the same additive manufacturing process.

As mentioned, in some examples, the additively forming at 510 comprises additively manufacturing dual-walled fluid conduit 100 utilizing powder fusion, in which a manufacturing powder is fused to form dual-walled fluid conduit 100. In some such examples, it is desirable to remove residual manufacturing powder from within dual-walled fluid conduit 100 subsequent to the additively forming at 510. In some such examples, support structure 200 is configured to facilitate removal of residual manufacturing powder from within dual-walled fluid conduit 100. For example, as shown in Fig. 12, in some examples, the additively forming the support structure at 505 comprises additively forming a support body 204 that surrounds an open central region 206, forming a plurality of radial drain channels 208 within support body 204 that provide fluid communication between open central region 206 and an exterior of support body 204, and additively forming a plurality of drain holes 210 extending through a top surface of support body 204 to a plurality of radial drain channels 208. Drain channels 208 may be provided with a cathedral shape to strengthen support body 204. **In** some examples, the additively forming at 510 comprises additively forming inner duct wall 212 and outer duct wall 202 on support structure 200 such that central conduit 120 of dual-walled fluid conduit 100 is in fluid communication with open central region 206 of support structure 200 and inter duct channel 122 of dual-walled fluid conduit 100 is in fluid communication with drain holes 210. In such examples, support structure 200 is configured to permit residual manufacturing powder present in central conduit 120 of dual-walled fluid conduit 100 to be removed therefrom via open central region 206 and radial drain channels 208. Similarly, in such examples, support structure 200 is configured to permit residual manufacturing powder present in inter duct channel 122 to be removed therefrom via drain holes 210 and radial drain channels 208.

Turning again to Fig. 11, in some examples, methods 500 comprise additively forming a cap at 525 that interconnects outer duct second flared end region 134 of outer duct wall 202 and inner duct second flared end region 138 of inner duct wall 212. The cap may be utilized to support outer duct second flared end region 134 relative to inner duct second flared end region 138 with inter duct channel 122 extending therebetween. The cap may be formed of one or more of the same or one or more different materials as inner duct wall 212 and/or outer duct wall 202. In some examples, the cap is monolithic or forms a single structure with inner duct wall 212 and/or outer duct wall 202 and/or is formed via the same additively forming process. When included, the additively forming the cap at 525 is performed with any suitable sequence or timing within methods 500 such as subsequent the additively forming at 510, prior to the separating at 530, prior to the removing at 535, prior to the shaping 540, prior to the separating at 560, and/or prior to the separating at 565.

Fig. 12 illustrates an example of a cap 220 that may be formed during the forming at 525. As shown, cap 220 interconnects inner duct second flared end region 138 with outer duct second flared end region 134 and supports inner duct wall 212 and outer duct wall 202 with inner duct external surface 118 spaced apart from outer duct internal surface 108 at least proximate or along inner duct second flared end region 138 and outer duct second flared end region 134. In this example, cap 220 comprises a disk formed on and interconnecting inner duct base 144 of inner duct second flared end region 138 and outer duct base 152 of outer duct second flared end region 134. Cap 220 further includes a cap open central region 222 aligned with central conduit 120 of dual-walled fluid conduit 100 and a plurality of cap bores 224 extending through an upper surface of cap 220 to inter duct channel 122. As discussed in more detail herein, cap bores 224 and cap open central region 222 may be utilized to exhaust residual manufacturing powder from within dual-walled fluid conduit 100.

With continued reference to Fig. 11, in some examples, methods 500 comprise separating dual-walled fluid conduit 100 from the build plate 230 at 530. In particular, methods 500 comprise the separating at 530 when the additively forming at 510 is performed on the build plate 230. The separating at 530 includes any suitable method for disengaging inner duct first flared end region 136 and outer duct second flared end region 132 from the build plate 230. As a more specific example, when methods 500 comprise the additively forming the support structure 200 at 505 and the additively forming at 510 comprises interconnecting dual-walled fluid conduit 100 with the support structure 200, the separating at 530 may include separating a connecting portion of the support structure 200 that is directly connected to dual-walled fluid conduit 100 from a base portion of the support structure 200 that is in contact with the build plate 230. In such examples, the base portion of the support structure 200 interconnects inner duct wall 212 and outer duct wall 202 subsequent to the separating at 530. In such examples, the connecting portion of the support structure 200 is separated from the base portion of the support structure utilizing any suitable procedure such as milling, machining, and/or cutting. As shown in the examples of Fig. 12, connecting portion 226 of support structure 200 interconnects inner duct base 144 of inner duct first flared end region 136 with outer duct base 152 of outer duct first flared end region 132 and base portion 228 of support structure 200 contacts build plate 230. Subsequent to the separating at 530, connecting portion 226 of support structure 200 supports outer duct wall 202 relative to inner duct wall 212 such as to retain the indexing of inner duct wall 212 relative to outer duct wall 202 during subsequent steps of methods 500.

In other examples, the separating at 530 comprises removing the entire support structure 200 from dual-walled first flared end region 140 of dual-walled fluid conduit 100, such that the separating at 530 includes separating inner duct wall 212 and outer duct wall 202 from first flared end regions at 560.

When included, the separating at 530 is performed with any suitable sequence or timing within methods 500, such as prior to the removing at 535, subsequent to the removing at 535, prior to the shaping at 540, prior to the separating at 560, substantially simultaneously with the separating at 560 and/or prior to the separating at 565.

With continued reference to Fig. 11, in some examples, methods 500 comprise removing manufacturing powder from within dual-walled fluid conduit at 535. In particular, the removing at 535 is performed when the additively forming at 510 comprises utilizing one or more powder fusion processes, and residual manufacturing powder is present within dual-walled fluid conduit 100, such as within central conduit 120 and/or inter duct channel 122, subsequent to the additively forming at 510. The removing at 535 comprises any suitable process of removing the residual manufacturing powder from within dual-walled fluid conduit 100, such as flowing, blowing, and/or pushing the residual manufacturing powder from within dual-walled fluid conduit 100. With reference to Fig. 12 in some examples, the removing at 535 includes forcing a fluid, such as air, into central conduit 120 from cap open central region 222 to flow residual manufacturing powder therefrom through open central region 206 and radial drain channels 208 of support structure 200. Similarly, in some examples, the removing at 535 comprises forcing a fluid into inter duct channel 122 through cap bores 224 to flow residual manufacturing powder therefrom through drain holes 210 and radial drain channels 208 of support structure 200.

When included, the removing at 535 is performed with any suitable sequence or timing within methods 500. In some examples, the removing at 535 is performed prior to the separating at 530 and/or within the additive manufacturing appliance such that the residual manufacturing powder can be collected and recycled. Additionally or alternatively, the removing at 535 is performed subsequent the separating at 530. As more examples, the removing at 535 may be performed prior to the heat treating at 538, prior to the forming the at 545, and/or prior to the installing temporary fasteners at 550.

As shown in Fig. 11, in some examples, methods 500 comprise heat treating dual-walled fluid conduit 100 at 538. In some examples, the heat treating at 538 comprises heat treating the inner duct wall 212 and/or the outer duct wall 202, such as to strengthen the inner duct wall 212 and/or the outer duct wall 202 subsequent to the forming at 515 and/or the forming at 520. In particular, when the additively forming at 515 and/or the additively forming at 520 comprises powder fusion of one or more metal powders and/or selective laser sintering of one or more metal powders, the heat-treating the inner duct wall 212 and/or the outer duct wall 202 may be performed to strengthen, harden, homogenize, stress-relieve, sinter, and/or anneal the sintered or fused metal powder(s). When methods 500 include the removing excess manufacturing powder from within dual-walled fluid conduit 100 at 535 and the heat treating at 538, it is desirable to perform the heat treating at 538 subsequent the removing at 535 such that the residual manufacturing powder is not bonded within the dual-walled fluid conduit 100 during the heat treating at 538.

With continued reference to Fig. 11, in some examples, methods 500 comprise shaping bases of dual-walled fluid conduits at 540. The shaping at 540 may include shaping inner duct base 144 of inner duct first flared end region 136, inner duct base 144 of inner duct second flared end region 138, outer duct base 152 of outer duct first flared end region 132, and/or outer duct base 152 of outer duct second flared end region 134. In some examples, the shaping at 540 comprises shaping inner duct base(s) 144 and outer duct base(s) 152 to be flush, aligned, or planar with one another. Additionally or alternatively, the shaping at 540 comprises forming a complex shape in inner duct base(s) 144 and/or outer duct base(s) 152 that is configured to interface with an exterior component and/or another dual-walled fluid conduit 100. The shaping 540 is performed via any suitable process such as milling, machining, and/or cutting. Additionally or alternatively, the shaping at 540 is performed during the additively forming at 510, in which inner duct bases 144 and/or outer duct bases 152 are additively formed with the desired shapes and/or dimensions.

In some examples, the shaping at 540 comprises removing a sacrificial section of the connecting portion 226 of support structure 200 from inner duct base 144 of inner duct first flared end region 136 and outer duct base 152 of outer duct first flared end region 132. In some examples, the shaping at 540 is performed without disconnecting inner duct base 144 of first inner duct flared end region 136 and outer duct base 152 of outer duct first flared end region 132. In other examples, the shaping at 540 comprises disconnecting inner duct base 144 from outer duct base 152, such as via removing the entirety of connecting portion 226 of support structure 200 from dual-walled fluid conduit 100. In such examples, the shaping at 540 comprises separating the inner duct and outer duct first flared end regions (136, 132) at 560.

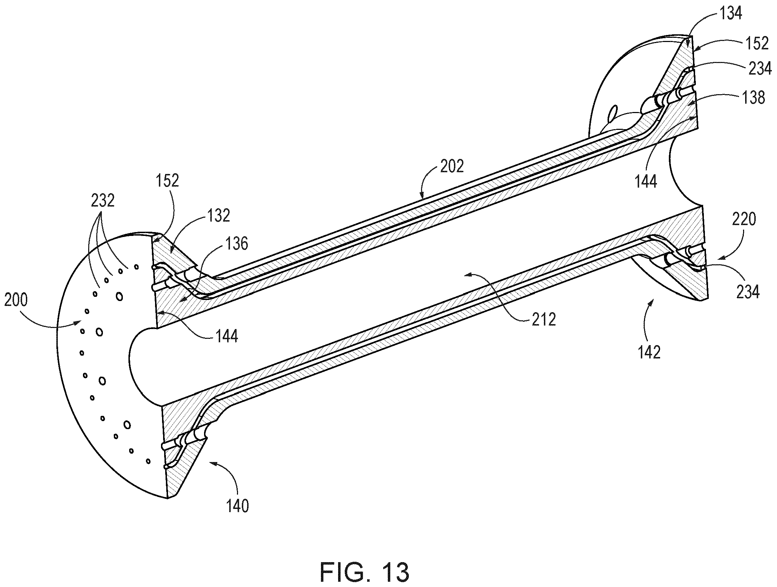

Similarly, for some examples in which methods 500 comprise additively forming cap 220 at 525, the shaping at 540 comprises removing at least some of, or the entirety of, cap 220. As shown in Fig. 13, in some examples, the shaping at 540 comprises removing sacrificial portions of cap 220 from inner duct base 144 of inner duct second flared end region 138 and from outer duct base 152 of outer duct second flared end region 134 while leaving cap bridging sections 234 of cap 220 that interconnect inner duct base 144 of inner duct second flared end region 138 with outer duct base 152 of outer duct second flared end region 134. In other examples, the shaping at 540 comprises removing the entirety of cap 220 such as to disconnect inner duct second flared end region 138 from outer duct second flared end region 134. In such examples, the shaping at 540 comprises the separating at 565.

When included, the shaping at 540 is performed with any suitable sequence or timing within methods 500, with examples including subsequent to the separating at 530, prior to the forming the fastener bores at 545, subsequent to the forming the fastener bores at 545, prior to the installing the sealing regions at 555, and/or prior to and/or substantially with the separating at 560 and/or the separating at 565.

With continued reference to Fig. 11, in some examples, methods 500 comprise forming a plurality of fastener bores in dual-walled fluid conduit 100 at 545. In some examples, the forming at 545 comprises forming a plurality of inner duct fastener bores 128 in dual-walled fluid conduit 100. In particular, in some examples, the forming at 545 comprises forming a plurality of first end inner duct fastener bores 128 in a dual-walled first flared end region 140 of dual-walled fluid conduit 100, such as discussed in more detail herein. Additionally or alternatively, in some examples, the forming at 545 comprises forming a plurality of second end inner duct fastener bores 128 in dual-walled second flared end region 142 of dual-walled fluid conduit 100, such as discussed in more detail herein. In some examples, the forming the plurality of inner duct fastener bores 128 comprises forming a plurality of fastener-receiving regions 127 in inner duct wall 212 and/or forming a plurality of seal-receiving regions 129 in outer duct wall 202, such as discussed in more detail herein.

In some examples, the forming at 545 comprises forming a plurality of outer duct fastener bores 148 in dual-walled fluid conduit 100. In particular, in some examples, the forming at 545 comprises forming a plurality of first end outer duct fastener bores 148 in dual-walled first flared end region 140 of dual-walled fluid conduit 100, such as discussed herein. Additionally or alternatively, in some examples, the forming at 545 comprises forming a plurality of second end outer duct fastener bores 148 in dual-walled second flared end region 142 of dual-walled fluid conduit, such as discussed in more detail herein.

In some examples, the forming the plurality of fastener bores at 545 is performed while at least a portion of support structure 200, such as connecting portion 226 or bridging sections 232, interconnect inner duct first flared end region 136 with outer duct first flared end region 132. Additionally or alternatively, in some examples, the forming at 545 is performed while at least a portion of cap 220, such as the cap bridging sections 234, interconnects inner duct second flared end region 138 with outer duct second flared end region 134. In some examples, the forming at 545 comprises forming at least one inter duct port 190 in outer duct wall 202, such as discussed in more detail herein.

Fig. 13 illustrates an example in which the forming at 545 comprises forming a plurality of first end inner duct fastener bores 128 in dual-walled first flared end region 140 and forming a plurality of second end inner duct fastener bores 128 in dual-walled second flared end region 142 while bridging sections 232 of support structure 200 interconnect inner duct first flared end region 134 and outer duct first flared end region 132 and while cap bridging sections 234 interconnect inner duct second flared end region 138 with outer duct second flared end region 134. As shown in these examples, inner duct fastener bores 128 formed during the forming at 545 comprise seal-receiving regions 129 in outer duct wall 202 and fastener-receiving regions in inner duct wall 212.

In some examples, the forming at 545 is performed subsequent the forming the dual-walled fluid conduit 100 at 510 and comprises any suitable material-removal process for forming bores having the desirable dimensions and shapes within dual-walled fluid conduit 100, with examples including drilling, tapping, boring, countersinking, and/or combinations thereof. Additionally or alternatively, in some examples, the forming at 545 is performed substantially simultaneously with, or as a portion of the additively forming the dual-walled fluid conduit 100 at 510. In particular, in some such examples the additively forming at 510 comprises additively forming inner duct wall 212 at 520 and/or additively forming outer duct wall 202 at 515 with inner duct fastener bores 128 extending therethrough. Additionally or alternatively, in some such examples, the forming at 515 comprises additively forming outer duct wall 202 with outer duct fastener bores 148 extending therethrough.

When included, the forming at 545 is performed with any suitable sequence or timing within methods 500, such as subsequent to the forming at 510, at least substantially simultaneously with the forming at 510, subsequent to the shaping at 540, prior to the shaping at 540, prior to the installing temporary fastener at 550, prior to the separating at 560, prior to the separating at 565, and/or prior to the installing at 570.

As shown in Fig. 11, in some examples, methods 500 comprise installing a plurality of temporary fasteners in at least a subset of the inner duct fastener bores at 550. In particular, the installing at 550 may include installing temporary fasteners in at least some of the first end inner duct fastener bores 128 and/or installing temporary fasteners in at least some of the second end inner duct fastener bores 128. When included, the temporary fasteners are configured to operatively couple inner duct wall 212 with outer duct wall 202 such as to maintain indexing between inner duct wall 212 and outer duct wall 202 and/or support inner duct wall 212 relative to outer duct wall 202 once inner duct wall 212 and outer duct wall 202 are completely separated from one another, such as subsequent to the separating at 560, subsequent to the separating at 565, and/or during a portion of the installing at 570. In some examples, the temporary fasteners are configured to engage with outer duct wall 202 via seal-receiving regions 129 of inner duct fastener bores 128 and engage with inner duct wall 212 via fastener-receiving regions 127 of inner duct fastener bores 128. When included, the installing the temporary fasteners at 550 is performed with any suitable sequence or timing within methods 500, such as prior to the separating at 560, prior to the separating at 565, prior to the installing at 570, prior to the removing at 575, and/or subsequent to the forming the fastener bores at 545.

As shown in Fig. 11, in some examples, methods 500 comprise installing at least one sealing region along at least one base of dual-walled fluid conduit 100 at 555. In some examples, the installing at 555 comprises installing at least one inner duct sealing region 154 along at least one inner duct base 144 of inner duct wall 212 and/or of inner duct 112. More specifically, in some examples, the installing at 555 comprises installing inner duct sealing region 154 along inner duct base 144 of inner duct first flared end region 136 and/or installing inner duct sealing region 154 along inner duct base 144 of inner duct second flared end region 138. In some examples, the installing at 555 comprises installing at least one outer duct sealing region 156 along at least one outer duct base 152 of outer duct wall 202 and/or of outer duct 102. More specifically, in some examples, the installing at 555 comprises installing outer duct sealing region 156 along outer duct base 152 of outer duct first flared end region 132 and/or installing outer duct sealing region 156 along outer duct base 152 of outer duct second flared end region 134.

The installing the sealing regions at 555 may include installing any of the sealing regions that are discussed herein. As a more specific example, installing inner duct sealing regions 154 may include forming one or more circular grooves along inner duct base 144 and inserting one or more o-rings in the one or more circular grooves. Likewise, installing outer duct sealing regions 156 may include forming one or more grooves along outer duct base 152 and installing one or more o-rings in the one or more grooves.

When included, the installing the one or more sealing regions at 555 is performed with any suitable sequence or timing within methods 500, such as subsequent the shaping at 540, prior to or subsequent to the forming fastener bores at 545, subsequent to the installing temporary fasteners at 550, subsequent to the separating at 560, and/or subsequent to the separating at 556, and/or prior to the installing at 570.

With continued reference to Fig. 11, in some examples, methods 500 comprise separating inner duct first flared end region 136 from outer duct first flared end region 132 at 560. Subsequent to the separating at 560, inter duct channel 122 completely separates inner duct first flared end region 136 from outer duct first flared end region 132. That said, in some examples, temporary fasteners interconnect inner duct first flared end region 136 and outer duct first flared end region 132 during and/or subsequent to the separating at 560.

In particular, methods 500 comprise the separating at 560 for examples in which inner duct first flared end region 136 and outer duct first flared end region 132 are interconnected, such as during the additively forming at 510. In some examples, the separating at 560 comprises removing any remaining portion of support structure 200 from dual-walled first flared end region 140 of dual-walled fluid conduit 100, such as connecting portion 226 and/or bridging sections 232. As mentioned, in some examples, the separating at 560 is performed during the shaping at 540, in which the entirety of connecting portion 226 of support structure 200 is removed from dual-walled first flared end region 140. In other examples, the separating at 560 comprises removing bridging sections 232 of support structure 200 that interconnect inner duct wall 212 and outer duct wall 202 to one another subsequent to the shaping at 540. With reference to Fig. 13 for a more specific example, the separating at 560 may include removing bridging sections 232 of support structure 200 by forming an annulus between inner duct base 144 and outer duct base 152 of dual-walled first flared end region 140 such that inter duct channel 122 extends therebetween.

When included, the separating at 560 is performed with any suitable sequence or timing within methods 500 such as prior to, as at least substantially simultaneously with, or subsequent to the separating at 565, subsequent to the forming fastener bores at 545, subsequent to the shaping at 540, subsequent to the installing temporary fasteners at 545, and/or prior to the installing at 570, prior to the removing the at 575, and/or prior to the repeating at 580.

As further shown in Fig. 11, in some examples, methods 500 comprise separating inner duct second flared end region 138 from outer duct second flared end region 134 at 565. Subsequent to the separating at 565, inter duct channel 122 completely separates inner duct second flared end region 138 from outer duct second flared end region 134. That said, in some examples temporary fasteners interconnect inner duct second flared end region 138 with outer duct second flared end region 134 during or subsequent to the separating at 565. When inner duct wall 212 and outer duct wall 202 are completely separated from one another by inter duct channel 122, such as subsequent to the separating at 560 and/or the separating at 565, inner duct wall 212 forms inner duct 112 and outer duct wall 202 forms outer duct 102, and dual-walled fluid conduit 100 may include any of the examples of dual-walled fluid conduits 100 illustrated and discussed herein with reference to Figs. 1-10.

In particular, methods 500 comprise the separating at 565 for examples in which inner duct second flared end region 138 and outer duct second flared end region 134 are interconnected, such as during the forming at 525. More specifically, in some examples the separating at 565 comprises removing any remaining portion of cap 220 from dual-walled second flared end region 142 of dual-walled fluid conduit 100. As mentioned, in some examples, the separating at 565 is performed during the shaping at 540, in which the entirety of cap 220 is removed from dual-walled second flared end region 142. In other examples, the separating at 565 comprises removing cap bridging sections 234 of cap 220 that interconnect inner duct wall 212 and outer duct wall 202 to one another. With reference to Fig. 13 for a more specific example, the separating at 565 may include removing cap bridging sections 324 from dual-walled second flared end region 142 by forming an annulus between inner duct base 144 and outer duct base 152 such that inter duct channel 122 completely separates inner duct base 144 and outer duct base 152 of dual-walled second flared end region 142.

When included, the separating at 565 is performed with any suitable sequence or timing within methods 500 such as prior to, as at least substantially simultaneously with, or subsequent to the separating at 560, subsequent to the forming fastener bores at 545, subsequent to the shaping at 540, subsequent to the installing temporary fasteners at 550, and/or prior to the installing at 570, prior to the removing the temporary fasteners at 575, and/or prior to the repeating at 580.

The separating at 560 and/or the separating at 565 may include any suitable process for separating inner duct wall 212 from outer duct wall 202 including material-removal processes such as milling, machining, cutting, and/or combinations thereof.

As shown in Fig. 11, in some examples, methods 500 further include installing dual-walled fluid conduit 100 within a fluid-handling system 26, and/or within dual-walled fluid transportation systems 10 at 570. Installing dual-walled fluid conduit 100 within a fluid-handling system 26 may include installing dual-walled fluid conduit 100 within any of the fluid-handling systems discussed herein, such as a fluid-handling system 26 of aircraft 12. In some such examples, the installing at 570 comprises interconnecting dual-walled first flared end region 140 with a fluid inlet and/or a fluid outlet of the fluid-handling system 26 and interconnecting dual-walled second flared end region 142 with the other of the fluid inlet and the fluid outlet to provide fluid commutation therebetween. In some such examples, the installing at 570 comprises interconnecting inter duct channel 122 of dual-walled fluid conduit 100 with a first fluid channel of the fluid inlet and the fluid outlet and interconnecting central conduit 120 of dual-walled fluid conduit 100 with a second fluid channel of the fluid inlet and the fluid outlet, such that dual-walled fluid conduit 100 provides fluid communication between the first fluid channel and the second fluid channel of the fluid-handling system 26, such as discussed herein. In such examples, dual-walled fluid conduit 100 may be described as forming dual-walled fluid transportation system 10. In some such examples, dual-walled fluid conduit 100 is interconnected to the fluid inlet and the fluid outlet of the dual-walled fluid-transportation system 10 with inner duct fasteners 130 and outer duct fasteners 150, which may support inner duct 112 spaced apart from outer duct 102 with inter duct channel 122 extending therebetween, such as discussed herein.

The installing at 570 additionally or alternatively may include interconnecting dual-walled fluid conduit 100 with at least one other dual-walled fluid conduit 100 to form a plurality of interconnected dual-walled fluid conduits 100. More specifically, the interconnecting may include providing fluid communication between the inter duct channels 122 and/or the central conduits 120 of the plurality of interconnected dual-walled fluid conduits 100. In some such examples, dual-walled fluid conduit 100 is a first dual-walled fluid conduit 100 and the interconnecting comprises interconnecting dual-walled fluid conduit 100 with a second dual-walled fluid conduit 100. In some such examples, the interconnecting the first dual-walled fluid conduit 100 with the second dual-walled fluid conduit 100 comprises installing a connecting ring 180 within the end regions of inter duct channels 122 of the first dual-walled fluid conduit 100 and the second dual-walled fluid conduit 100, such as discussed herein. In some such examples, connecting ring 180 is used as an alignment device to assist in aligning inner ducts 112 and/or outer ducts 102 during the interconnecting the first and second dual-walled fluid conduits 100. In some such examples, the interconnecting the first and second dual-walled fluid conduits 100 comprises interconnecting and/or forming a fluid seal between inner duct base 144 of the first dual-walled fluid conduit 100 and inner duct base 144 of the second dual-walled fluid conduit 100, such as via or utilizing inner duct fastener bores 128 and inner duct fasteners 130, as discussed herein. Additionally or alternatively, in some such examples, the interconnecting the first and second dual-walled fluid conduits 100 comprises interconnecting and/or forming a fluid seal between outer duct base 152 of the first dual-walled fluid conduit 100 with outer duct base 152 of the second dual-walled fluid conduit 100, such as via or utilizing outer duct fastener bores 148 and outer duct fasteners 150.

Additionally or alternatively, in some examples, the interconnecting the first dual-walled fluid conduit 100 and the second dual-walled fluid conduit 100 comprises operatively coupling and/or forming fluid seals between one face of connecting plate 170 and inner duct base 144 and/or outer duct base 152 of the first dual-walled fluid conduit 100 and operatively coupling and/or forming fluid seals between the other face of connecting plate 170 and inner duct base 144 and/or outer duct base 152 of the second dual-walled fluid conduit 100, such as discussed in more detail herein. In such examples, inner duct fastener bores 128, inner duct fasteners 130, outer duct fastener bores 148, and/or outer duct fasteners 150 may be utilized to interconnect the first and second dual-walled fluid conduits 100 to connecting plate 170, such as discussed herein.

In some examples, the installing at 570 further includes interconnecting the first dual-walled fluid conduit 100 with a third dual-walled fluid conduit 100. In such examples, the installing comprises interconnecting the dual-walled first flared end region 140 of the first dual-walled fluid conduit 100 with the second dual-walled fluid conduit 100 and interconnecting the dual-walled second flared end region 142 of the first dual-walled fluid conduit 100 with the third dual-walled fluid conduit 100, such as via the same or a different method and/or the same or different connecting structure discussed herein for the interconnecting the first and second dual-walled fluid conduits 100.

When the installing at 570 comprises interconnecting the first dual-walled fluid conduit 100 with a second and optionally a third dual-walled fluid conduit 100, the installing further may include installing the plurality of interconnected dual-walled fluid conduits 100 within a fluid-handling system 26, such as discussed herein. In some such examples, the installing at 570 comprises interconnecting the interconnected dual-walled fluid conduits 100 to an adjacent structure within the dual-walled fluid transportation system 10 other than the fluid inlet and the fluid outlet, such as by interconnecting connecting plate 170 with the adjacent structure, such as discussed herein.

In some examples, the installing at 570 comprises installing inner duct fasteners 130 within fastener-receiving regions 127 of inner duct fastener bores 128, and installing inter duct sealing members 146 within seal-receiving regions 129 of inner duct fastener bores 128, such as discussed herein. Likewise, in some examples, the installing at 570 comprises installing outer duct fasteners 150 in outer duct fastener bores 148, such as discussed herein. In some examples, the installing at 570 further comprises installing at least one inter duct port sealing member in the at least one inter duct port 190.

When included, the installing at 570 is performed with any suitable sequence or timing within methods 500, such as subsequent to the additively forming at 515, subsequent to the separating at 530, subsequent to the shaping at 540, subsequent to the forming at 545, subsequent to the installing at 550, subsequent to the installing at 555, subsequent to the separating at 560, and/or subsequent to the separating at 560, and/or substantially simultaneously with or subsequent to the removing temporary fasteners at 570 and/or prior to, substantially simultaneously with, and/or subsequent to the repeating at 580.

When methods 500 comprise the installing the temporary fasteners at 550, methods 500 further include removing the temporary fasteners at 575. The removing at 575 comprises mechanically disconnecting inner duct 112 from outer duct 102. When included, the removing at 575 may be performed prior to, or during the installing at 570. In particular, the removing at 575 may include replacing temporary fasteners with inner duct fasteners 130 during the installing at 570 such that inner duct 112 remains indexed with outer duct 102 during the installing at 570.

With continued reference to Fig. 11, in some examples, methods 500 comprise repeating at 580. When included, the repeating at 580 comprises repeating any desirable number or combination of steps of methods 500 in any suitable order and/or repeating the steps of methods 500 any desirable number of times. In some examples, the repeating at 580 is performed to form a plurality of dual-walled fluid conduits 100, which includes repeating the forming at 510, optionally in combination with repeating any of the one or more additional steps of methods 500 to form a plurality of dual-walled fluid conduits 100 having the desired configurations. The plurality of dual-walled fluid conduits 100 formed according to the repeating at 580 may possess the same configuration or a plurality of different configurations, such as by repeating the same or various different steps of methods 500 in combination with the additively forming at 510 and/or by performing the additively forming at 510 according to the same or different processes. In some examples, the repeating at 580 comprises repeating the installing at 570 to interconnect any suitable number of dual-walled fluid conduits 100 with one another, such as at least 3, at least 4, at least 5, at least 6, at least 10, at most 10, at most 20, and/or at most 100 dual-walled fluid conduits 100. In some examples, the repeating at 580 comprises forming a plurality of dual-walled fluid conduits 100 and interconnecting the plurality of dual-walled fluid conduits 100 with one another. Additionally or alternatively, in some examples the repeating at 580 comprises repeating the installing 570 to install a plurality of dual-walled fluid conduits 100 at different locations within a dual-walled fluid transportation system 10 and/or to interconnect a plurality of different fluid inlets and fluid outlets.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of" performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a nonlimiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, "at least substantially," when modifying a degree or relationship, includes not only the recited "substantial" degree or relationship, but also the full extent of the recited degree or relationship. A substantial amount of a recited degree or relationship may include at least 75% of the recited degree or relationship. For example, an object that is at least substantially formed from a material includes an object for which at least 75% of the object is formed from the material and also includes an object that is completely formed from the material. As another example, a first direction that is at least substantially parallel to a second direction includes a first direction that forms an angle with respect to the second direction that is at most 22.5 degrees and also includes a first direction that is exactly parallel to the second direction. As another example, a first length that is substantially equal to a second length includes a first length that is at least 75% of the second length, a first length that is equal to the second length, and a first length that exceeds the second length such that the second length is at least 75% of the first length.

The various disclosed elements of apparatuses and steps of methods disclosed herein are not required to all apparatuses and methods according to the present disclosure.

## Claims

1. A dual-walled fluid transportation system (10), the system (10) comprising:
at least one dual-walled fluid conduit (100), wherein the dual-walled fluid conduit (100) is additively formed and comprises an additively formed outer duct wall that surrounds an outer duct internal volume and an inner duct wall additively formed within the outer duct internal volume (110), the at least one dual-walled fluid conduit (100) comprising:
the outer duct (102), comprising an outer duct pair of flared end regions (104) and an outer duct central region (106) extending between the outer duct pair of flared end regions (104), wherein the outer duct central region (106) and the outer duct pair of flared end regions (104) define an outer duct internal surface (108) that surrounds the outer duct internal volume (110); and
the inner duct (112), defining a central conduit (120) and extending within the outer duct internal volume (110), wherein the inner duct (112) comprises an inner duct pair of flared end regions (114) and an inner duct central region (116) extending between the inner duct pair of flared end regions (114), and wherein the inner duct central region (116) and the inner duct pair of flared end regions (114) define an inner duct external surface (118);
wherein the inner duct (112) and the outer duct (102) define interlocking geometries, wherein the inner duct (112) and the outer duct (102) are dimensioned and shaped to be supported such that an inter duct channel (122) completely separates the inner duct external surface (118) from the outer duct internal surface (108) which means that the outer duct internal surface (108) and the inner duct external surface (118) are non-contacting, with the inter duct channel (122) extending therebetween,
wherein the outer duct (102) is a monolithic body, and
wherein the inner duct (112) is a monolithic body.

2. The system (10) of claim 1, wherein the wherein the dual-walled fluid conduit (100) comprises a dual-walled central region (158) defined by the inner duct central region (116) and the outer duct central region (106), and wherein the dual-walled central region (158) comprises a curved configuration (160).

3. The system (10) of claim 1 or 2, wherein each inner duct flared end region of the inner duct pair of flared end regions (114) defines an inner duct outer-most lateral dimension (124), wherein, along the outer duct central region (106), the outer duct internal surface (108) defines an outer duct channel outer-most lateral dimension (126), and wherein the inner duct outer-most lateral dimension (124) is greater than the outer duct channel outer-most lateral dimension (126).

4. The system (10) of any of claims 1 to 3, wherein the at least one dual-walled fluid conduit (100) comprises a plurality of inner duct fastener bores (128) disposed around at least one of a dual-walled first flared end region (140) and a dual-walled second flared end region (142), and wherein the plurality of inner duct fastener bores (128) are configured to cooperate with a plurality of inner duct fasteners (130) to operatively couple the inner duct (112) to an adjacent structure.

5. The system (10) of any of claims 1 to 4, further comprising a plurality of outer duct fastener bores (148) positioned along at least one of a dual-walled first flared end region (140) of the dual-walled fluid conduit (100) and a dual-walled second flared end region (142) of the dual-walled fluid conduit (100) and configured to cooperate with a plurality of outer duct fasteners (150) to operatively couple the outer duct (102) to an adjacent structure.

6. The system (10) of any of claims 1 to 5, wherein the dual-walled fluid transportation system (10) comprises a plurality of dual-walled fluid conduits (100), and wherein the dual-walled fluid transportation system (10) further comprises a connecting plate (170) that is configured to interconnect adjacent dual-walled fluid conduits (100) of the plurality of dual-walled fluid conduits (100) to one another, and wherein the connecting plate (170) is configured to support the inner ducts (112) and the outer ducts (102) of the adjacent dual-walled fluid conduits (100) such that the inter duct channels (122) completely separate the inner duct external surfaces (118) from the outer duct internal surfaces (108) at least proximate the connecting plate (170).

7. The system (10) of any of claims 1 to 6, wherein the dual-walled fluid transportation system (10) further comprises a connecting ring (180) that is configured to be positioned between an inner duct base (144) of the inner duct (112) and an outer duct base (152) of the outer duct (102) and supports the inner duct (112) and the outer duct (102) such that the inter duct channel (122) completely separates the inner duct external surface (118) from the outer duct internal surface (108) at least proximate the connecting ring (180).

8. The system (10) of any of claims 1 to 7, wherein the inter duct channel (122) is configured to isolate mechanical failures from propagating between the inner duct (112) and the outer duct (102).

9. A method (500) for providing the system (10) of any of claims 1 to 8, comprising:
additively forming (510) the at least one dual-walled fluid conduit (100), comprising:
additively forming (515) an outer duct wall (202) that surrounds an outer duct internal volume (110) and defines an outer duct first flared end region (132) and an opposed outer duct second flared end region (134); and
additively forming (520) an inner duct wall (212) within the outer duct internal volume (110) with an inter duct channel (122) completely separating an inner duct external surface (118) of the inner duct wall (212) from an outer duct internal surface (108) of the outer duct wall (202) which means that the outer duct internal surface (108) and the inner duct external surface (118) are non-contacting, with the inter duct channel (122) extending therebetween, wherein the inner duct wall (212) surrounds a central conduit (120) and defines an inner duct first flared end region (136) and an opposed inner duct second flared end region (138), and wherein the inner duct wall (212) and the outer duct wall (202) define interlocking geometries.

10. The method (500) of claim 9, further comprising additively forming (505) a support structure (200) on a build plate (230), wherein the additively forming (510) the dual-walled fluid conduit (100) comprises additively forming the dual-walled fluid conduit (100) on the support structure (200).

11. The method (500) of claim 10, wherein the additively forming (510) the dual-walled fluid conduit (100) comprises interconnecting the inner duct first flared end region (136) and the outer duct first flared end region (132) to a connecting portion of the support structure (200) to interconnect the inner duct first flared end region (136) to the outer duct first flared end region (132).

12. The method (500) of claim 11, further comprising separating (530) the dual-walled fluid conduit (100) from the build plate (230) by separating the connecting portion of the support structure (200) from a base portion of the support structure (200) that is connected to the build plate (230).

13. The method (500) of claim 11 or 12, further comprising separating (560) the inner duct first flared end region (136) from the outer duct first flared end region (132) by removing bridging sections (232) of the connecting portion (200) of the support structure (200) that interconnect an inner duct base (144) of the inner duct first flared end region (136) and an outer duct base (152) of the outer duct first flared end region (132).

14. The method (500) of any of claims 9 to 13, further comprising additively forming (525) a cap (220) that interconnects the outer duct second flared end region (134) and the inner duct second flared end region (138).

15. The method (500) of claim 14, further comprising separating (565) the inner duct second flared end region (138) from the outer duct second flared end region (134) by removing bridging portions of the cap (200) that interconnect the inner duct second flared end region (138) and the outer duct second flared end region (134).

## Patentansprüche

1. Doppelwandiges Fluidtransportsystem (10), wobei das System (10) aufweist:
mindestens eine doppelwandige Fluidleitung (100), wobei die doppelwandige Fluidleitung (100) additiv gefertigt ist und eine additiv gefertigte äußere Leitungswand aufweist, die ein äußeres Leitungsinnenvolumen umgibt, sowie eine innere Leitungswand, die additiv innerhalb des äußeren Leitungsinnenvolumens (110) gefertigt ist, wobei die mindestens eine doppelwandige Fluidleitung (100) aufweist:
die äußere Leitung (102), die ein Paar äußerer aufgeweiteter Endbereiche (104) sowie einen äußeren Leitungszentralbereich (106) aufweist, der sich zwischen dem Paar äußerer aufgeweiteter Endbereiche (104) erstreckt, wobei der äußere Leitungszentralbereich (106) und das Paar äußerer aufgeweiteter Endbereiche (104) eine äußere Leitungsinnenfläche (108) definieren, die das äußere Leitungsinnenvolumen (110) umgibt; und
die innere Leitung (112), die einen zentralen Leitungskanal (120) definiert und sich innerhalb des äußeren Leitungsinnenvolumens (110) erstreckt, wobei die innere Leitung (112) ein Paar innerer aufgeweiteter Endbereiche (114) sowie einen inneren Leitungszentralbereich (116) aufweist, der sich zwischen dem Paar innerer aufgeweiteter Endbereiche (114) erstreckt, und wobei der innere Leitungszentralbereich (116) und das Paar innerer aufgeweiteter Endbereiche (114) eine innere Leitungsaußenfläche (118) definieren;
wobei die innere Leitung (112) und die äußere Leitung (102) ineinandergreifende Geometrien definieren, wobei die innere Leitung (112) und die äußere Leitung (102) so dimensioniert und geformt sind, dass sie derart getragen werden, dass ein Zwischenleitungs-Kanal (122) die innere Leitungsaußenfläche (118) vollständig von der äußeren Leitungsinnenfläche (108) trennt, was bedeutet, dass die äußere Leitungsinnenfläche (108) und die innere Leitungsaußenfläche (118) nicht in Kontakt stehen, wobei sich der Zwischenleitungs-Kanal (122) dazwischen erstreckt,
wobei die äußere Leitung (102) ein monolithischer Körper ist, und
wobei die innere Leitung (112) ein monolithischer Körper ist.

2. System (10) nach Anspruch 1, wobei die doppelwandige Fluidleitung (100) einen doppelwandigen Zentralbereich (158) aufweist, der durch den inneren Leitungszentralbereich (116) und den äußeren Leitungszentralbereich (106) definiert ist, und wobei der doppelwandige Zentralbereich (158) eine gekrümmte Konfiguration (160) aufweist.

3. System (10) nach Anspruch 1 oder 2, wobei jeder innere aufgeweitete Endbereich des Paares innerer aufgeweiteter Endbereiche (114) eine äußerste laterale Abmessung der inneren Leitung (124) definiert, wobei entlang des äußeren Leitungszentralbereichs (106) die äußere Leitungsinnenfläche (108) eine äußerste laterale Abmessung des äußeren Leitungskanals (126) definiert, und wobei die äußerste laterale Abmessung der inneren Leitung (124) größer ist als die äußerste laterale Abmessung des äußeren Leitungskanals (126).

4. System (10) nach einem der Ansprüche 1 bis 3, wobei die mindestens eine doppelwandige Fluidleitung (100) eine Vielzahl von Befestigungsbohrungen der inneren Leitung (128) aufweist, die um mindestens einen doppelwandigen ersten aufgeweiteten Endbereich (140) und einen doppelwandigen zweiten aufgeweiteten Endbereich (142) angeordnet sind, und wobei die Vielzahl von Befestigungsbohrungen der inneren Leitung (128) dazu ausgelegt ist, mit einer Vielzahl von Befestigungselementen der inneren Leitung (130) zusammenzuwirken, um die innere Leitung (112) betriebswirksam mit einer angrenzenden Struktur zu koppeln.

5. System (10) nach einem der Ansprüche 1 bis 4, des Weiteren aufweisend eine Vielzahl von Befestigungsbohrungen der äußeren Leitung (148), die entlang mindestens eines doppelwandigen ersten aufgeweiteten Endbereichs (140) der doppelwandigen Fluidleitung (100) und eines doppelwandigen zweiten aufgeweiteten Endbereichs (142) der doppelwandigen Fluidleitung (100) angeordnet sind und dazu ausgelegt sind, mit einer Vielzahl von Befestigungselementen der äußeren Leitung (150) zusammenzuwirken, um die äußere Leitung (102) betriebswirksam mit einer angrenzenden Struktur zu koppeln.

6. System (10) nach einem der Ansprüche 1 bis 5, wobei das doppelwandige Fluidtransportsystem (10) eine Vielzahl von doppelwandigen Fluidleitungen (100) aufweist, und wobei das doppelwandige Fluidtransportsystem (10) des Weiteren eine Verbindungsplatte (170) aufweist, die dazu ausgelegt ist, angrenzende doppelwandige Fluidleitungen (100) der Vielzahl von doppelwandigen Fluidleitungen (100) miteinander zu verbinden, und wobei die Verbindungsplatte (170) dazu ausgelegt ist, die inneren Leitungen (112) und die äußeren Leitungen (102) der angrenzenden doppelwandigen Fluidleitungen (100) so zu stützen, dass die Zwischenleitungs-Kanäle (122) die inneren Leitungsaußenflächen (118) vollständig von den äußeren Leitungsinnenflächen (108) zumindest in der Nähe der Verbindungsplatte (170) trennen.

7. System (10) nach einem der Ansprüche 1 bis 6, wobei das doppelwandige Fluidtransportsystem (10) des Weiteren einen Verbindungsring (180) aufweist, der dazu ausgelegt ist, zwischen einer inneren Leitungsbasis (144) der inneren Leitung (112) und einer äußeren Leitungsbasis (152) der äußeren Leitung (102) angeordnet zu werden, und der die innere Leitung (112) und die äußere Leitung (102) so stützt, dass der Zwischenleitungs-Kanal (122) die innere Leitungsaußenfläche (118) vollständig von der äußeren Leitungsinnenfläche (108) zumindest in der Nähe des Verbindungsrings (180) trennt.

8. System (10) nach einem der Ansprüche 1 bis 7, wobei der Zwischenleitungs-Kanal (122) dazu ausgelegt ist, mechanische Fehler davon abzuhalten, sich zwischen der inneren Leitung (112) und der äußeren Leitung (102) auszubreiten.

9. Verfahren (500) zur Bereitstellung des Systems (10) nach einem der Ansprüche 1 bis 8, aufweisend:
additives Fertigen (510) der mindestens einen doppelwandigen Fluidleitung (100), aufweisend:
additives Fertigen (515) einer äußeren Leitungswand (202), die ein äußeres Leitungsinnenvolumen (110) umgibt und einen ersten aufgeweiteten Endbereich der äußeren Leitung (132) sowie einen gegenüberliegenden zweiten aufgeweiteten Endbereich der äußeren Leitung (134) definiert; und
die additive Fertigung (520) einer inneren Leitungswand (212) innerhalb des äußeren Leitungsinnenvolumens (110) mit einem Zwischenleitungs-Kanal (122), der die innere Leitungsaußenfläche (118) der inneren Leitungswand (212) vollständig von der äußeren Leitungsinnenfläche (108) der äußeren Leitungswand (202) trennt, was bedeutet, dass die äußere Leitungsinnenfläche (108) und die innere Leitungsaußenfläche (118) nicht in Kontakt stehen, wobei sich der Zwischenleitungs-Kanal (122) dazwischen erstreckt, wobei die innere Leitungswand (212) einen zentralen Leitungskanal (120) umgibt und einen ersten aufgeweiteten Endbereich der inneren Leitung (136) sowie einen gegenüberliegenden zweiten aufgeweiteten Endbereich der inneren Leitung (138) definiert, und wobei die innere Leitungswand (212) und die äußere Leitungswand (202) ineinandergreifende Geometrien definieren.

10. Verfahren (500) nach Anspruch 9, des Weiteren aufweisend das additive Fertigen (505) einer Stützstruktur (200) auf einer Bauplatte (230), wobei das additive Fertigen (510) der doppelwandigen Fluidleitung (100) das additive Fertigen der doppelwandigen Fluidleitung (100) auf der Stützstruktur (200) aufweist.

11. Verfahren (500) nach Anspruch 10, wobei das additive Fertigen (510) der doppelwandigen Fluidleitung (100) das Verbinden des ersten aufgeweiteten Endbereichs der inneren Leitung (136) und des ersten aufgeweiteten Endbereichs der äußeren Leitung (132) mit einem Verbindungsabschnitt der Stützstruktur (200) aufweist, um den ersten aufgeweiteten Endbereich der inneren Leitung (136) mit dem ersten aufgeweiteten Endbereich der äußeren Leitung (132) zu verbinden.

12. Verfahren (500) nach Anspruch 11, des Weiteren aufweisend das Trennen (530) der doppelwandigen Fluidleitung (100) von der Bauplatte (230) durch das Trennen des Verbindungsabschnitts der Stützstruktur (200) von einem Basisabschnitt der Stützstruktur (200), der mit der Bauplatte (230) verbunden ist.

13. Verfahren (500) nach Anspruch 11 oder 12, des Weiteren aufweisend das Trennen (560) des ersten aufgeweiteten Endbereichs der inneren Leitung (136) von dem ersten aufgeweiteten Endbereich der äußeren Leitung (132) durch Entfernen von Brückensegmenten (232) des Verbindungsabschnitts (200) der Stützstruktur (200), die eine innere Leitungsbasis (144) des ersten aufgeweiteten Endbereichs der inneren Leitung (136) und eine äußere Leitungsbasis (152) des ersten aufgeweiteten Endbereichs der äußeren Leitung (132) miteinander verbinden.

14. Verfahren (500) nach einem der Ansprüche 9 bis 13, des Weiteren aufweisend das additive Fertigen (525) einer Kappe (220), die den zweiten aufgeweiteten Endbereich der äußeren Leitung (134) und den zweiten aufgeweiteten Endbereich der inneren Leitung (138) miteinander verbindet.

15. Verfahren (500) nach Anspruch 14, des Weiteren aufweisend das Trennen (565) des zweiten aufgeweiteten Endbereichs der inneren Leitung (138) von dem zweiten aufgeweiteten Endbereich der äußeren Leitung (134) durch Entfernen von Brückensegmenten der Kappe (200), die den zweiten aufgeweiteten Endbereich der inneren Leitung (138) und den zweiten aufgeweiteten Endbereich der äußeren Leitung (134) miteinander verbinden.

## Revendications

1. Système de transport de fluide à double paroi (10), le système (10) comprenant :
au moins un conduit de fluide à double paroi (100), dans lequel le conduit de fluide à double paroi (100) est formé additivement et comprend une paroi de conduit externe formée additivement qui entoure un volume interne de conduit externe et une paroi de conduit interne formée additivement à l'intérieur du volume interne de conduit externe (110), l'au moins un conduit de fluide à double paroi (100) comprenant :
le conduit externe (102) comprenant une paire de régions d'extrémité évasées (104) de conduit externe et une région centrale de conduit externe (106) s'étendant entre la paire de régions d'extrémité évasées (104) de conduit externe, dans lequel la région centrale de conduit externe (106) et la paire de régions d'extrémité évasées (104) de conduit externe définissent une surface interne de conduit externe (108) qui entoure le volume interne de conduit externe (110) ; et
le conduit interne (112), définissant un conduit central (120) et s'étendant à l'intérieur du volume interne de conduit externe (110), dans lequel le conduit interne (112) comprend une paire de régions d'extrémité évasées (114) de conduit interne et une région centrale de conduit interne (116) s'étendant entre la paire de régions d'extrémité évasées (114) de conduit interne, et dans lequel la région centrale de conduit interne (116) et la paire de régions d'extrémité évasées (114) de conduit interne définissent une surface externe de conduit interne (118) ;
dans lequel le conduit interne (112) et le conduit externe (102) définissent des géométries imbriquées, dans lequel le conduit interne (112) et le conduit externe (102) sont dimensionnés et façonnés pour être supportés de telle sorte qu'un canal interconduit (122) sépare complètement la surface externe de conduit interne (118) de la surface interne de conduit externe (108), ce qui signifie que la surface interne de conduit externe (108) et la surface externe de conduit interne (118) ne sont pas en contact, le canal interconduit (122) s'étendant entre les deux,
dans lequel le conduit externe (102) est un corps monolithique, et
dans lequel le conduit interne (112) est un corps monolithique.

2. Système (10) selon la revendication 1, dans lequel le conduit de fluide à double paroi (100) comprend une région centrale à double paroi (158) définie par la région centrale de conduit interne (116) et la région centrale de conduit externe (106), et dans lequel la région centrale à double paroi (158) comprend une configuration incurvée (160).

3. Système (10) selon la revendication 1 ou 2, dans lequel chaque région d'extrémité évasée de conduit interne de la paire de régions d'extrémité évasées (114) de conduit interne définit une dimension latérale la plus externe (124) de conduit interne, dans lequel, le long de la région centrale de conduit interne (106), la surface interne de conduit externe (108) définit une dimension latérale la plus externe (126) de canal de conduit externe, et dans lequel la dimension latérale la plus externe (124) de conduit interne est plus grande que la dimension latérale la plus externe (126) de canal de conduit externe.

4. Système (10) selon l'une quelconque des revendications 1 à 3, dans lequel l'au moins un conduit de fluide à double paroi (100) comprend une pluralité d'alésages de fixation de conduit interne (128) disposés autour d'au moins l'une d'une première région d'extrémité évasée à double paroi (140) et d'une seconde région d'extrémité évasée à double paroi (142), et dans lequel la pluralité d'alésages de fixation de conduit interne (128) est conçue pour coopérer avec une pluralité de fixations de conduit interne (130) pour accoupler de manière opérationnelle le conduit interne (112) à une structure adjacente.

5. Système (10) selon l'une quelconque des revendications 1 à 4, comprenant en outre une pluralité d'alésages de fixation de conduit externe (148) positionnés le long d'au moins l'une d'une première région d'extrémité évasée à double paroi (140) du conduit de fluide à double paroi (100) et d'une seconde région d'extrémité évasée à double paroi (142) du conduit de fluide à double paroi (100) et conçus pour coopérer avec une pluralité de fixations de conduit externe (150) pour accoupler de manière opérationnelle le conduit externe (102) à une structure adjacente.

6. Système (10) selon l'une quelconque des revendications 1 à 5, dans lequel le système de transport de fluide à double paroi (10) comprend une pluralité de conduits de fluide à double paroi (100), et dans lequel le système de transport de fluide à double paroi (10) comprend en outre une plaque de liaison (170) qui est conçue pour relier entre eux des conduits de fluide à double paroi adjacents (100) de la pluralité de conduits de fluide à double paroi (100) l'un à l'autre, et dans lequel la plaque de liaison (170) est conçue pour supporter les conduits internes (112) et les conduits externes (102) des conduits de fluide adjacents à double paroi (100) de telle sorte que les canaux interconduits (122) séparent complètement les surfaces externes de conduit interne (118) des surfaces internes de conduit externe (108) au moins à proximité de la plaque de liaison (170).

7. Système (10) selon l'une quelconque des revendications 1 à 6, dans lequel le système de transport de fluide à double paroi (10) comprend en outre un anneau de liaison (180) qui est conçu pour être positionné entre une base de conduit interne (144) du conduit interne (112) et une base de conduit externe (152) du conduit externe (102) et supporte le conduit interne (112) et le conduit externe (102) de telle sorte que le canal interconduit (122) sépare complètement la surface externe de conduit interne (118) de la surface interne de conduit externe (108) au moins à proximité de l'anneau de liaison (180).

8. Système (10) selon l'une quelconque des revendications 1 à 7, dans lequel le canal interconduit (122) est conçu pour isoler la propagation de défaillances mécaniques entre le conduit interne (112) et le conduit externe (102).

9. Procédé (500) permettant de fournir le système (10) selon l'une quelconque des revendications 1 à 8, comprenant : la formation additive (510) de l'au moins un conduit de fluide à double paroi (100), comprenant :
la formation additive (515) d'une paroi de conduit externe (202) qui entoure un volume interne de conduit externe (110) et définit une première région d'extrémité évasée (132) de conduit externe et une seconde région d'extrémité évasée opposée (134) de conduit externe ; et
la formation additive (520) d'une paroi de conduit interne (212) à l'intérieur du volume interne de conduit externe (110) avec un canal interconduit (122) séparant complètement une surface externe de conduit interne (118) de la paroi de conduit interne (212) d'une surface interne de conduit externe (108) de la paroi de conduit externe (202), ce qui signifie que la surface interne de conduit externe (108) et la surface externe de conduit interne (118) ne sont pas en contact, le canal interconduit (122) s'étendant entre les deux, dans lequel la paroi de conduit interne (212) entoure un conduit central (120) et définit une première région d'extrémité évasée (136) de conduit interne et une seconde région d'extrémité évasée opposée (138) de conduit interne, et dans lequel la paroi de conduit interne (212) et la paroi de conduit externe (202) définissent des géométries imbriquées.

10. Procédé (500) selon la revendication 9, comprenant en outre la formation additive (505) d'une structure de support (200) sur une plaque de construction (230), dans lequel la formation additive (510) du conduit de fluide à double paroi (100) comprend la formation additive du conduit de fluide à double paroi (100) sur la structure de support (200).

11. Procédé (500) selon la revendication 10, dans lequel la formation additive (510) du conduit de fluide à double paroi (100) comprend la liaison entre elles de la première région d'extrémité évasée (136) de conduit interne et de la première région d'extrémité évasée (132) de conduit externe à une partie de liaison de la structure de support (200) pour relier entre elles la première région d'extrémité évasée (136) de conduit interne et la première région d'extrémité évasée (132) de conduit externe.

12. Procédé (500) selon la revendication 11, comprenant en outre la séparation (530) du conduit de fluide à double paroi (100) de la plaque de construction (230) en séparant la partie de liaison de la structure de support (200) d'une partie de base de la structure de support (200) qui est reliée à la plaque de construction (230).

13. Procédé (500) selon la revendication 11 ou 12, comprenant en outre la séparation (560) de la première région d'extrémité évasée (136) de conduit interne de la première région d'extrémité évasée (132) de conduit externe en retirant des sections de pontage (232) de la partie de liaison (200) de la structure de support (200) qui relient entre elles une base de conduit interne (144) de la première région d'extrémité évasée (136) de conduit interne et une base de conduit externe (152) de la première région d'extrémité évasée (132) de conduit externe.

14. Procédé (500) selon l'une quelconque des revendications 9 à 13, comprenant en outre la formation additive (525) d'un capuchon (220) qui relie entre elles la seconde région d'extrémité évasée (134) de conduit externe et la seconde région d'extrémité évasée (138) de conduit interne.

15. Procédé (500) selon la revendication 14, comprenant en outre la séparation (565) de la seconde région d'extrémité évasée (138) de conduit interne de la seconde région d'extrémité évasée (134) de conduit externe en retirant des parties de pontage du capuchon (200) qui relient entre elles la seconde région d'extrémité évasée (138) de conduit interne et la seconde région d'extrémité évasée (134) de conduit externe.
